# FASCICULE DE BREVET EUROPEEN

(11) **EP 4 353 581 B1**
(45) Date de publication et mention de la délivrance du brevet: **27.08.2025**
(21) Numéro de dépôt: 24160683.9
(22) Date de dépôt: 15.04.2021
(51) Int. Cl.: B63B 1/12, B63B 35/44, B63B 73/10, B63B 59/06, B63B 35/38

(54) **INSTALLATION SOLAIRE FLOTTANTE**
SCHWIMMENDE SOLARANLAGE
FLOATING SOLAR PLANT

(30) Priorité: 28.04.2020 FR 2004233
(43) Date de publication de la demande: 17.04.2024
(62) Demande divisionnaire de: 21725976.1
(73) Titulaire: Ciel et Terre International, 59262 Sainghin en Melantois (FR)
(72) Inventeur: PROUVOST, Stéphane, 59262 SAINGHIN EN MELANTOIS (FR); LE BLAN, Benjamin, 59650 VILLENEUVE D'ASCQ (FR)
(74) Mandataire: Plasseraud IP

(56) Documents cités:
- WO-A1-2014/136107
- WO-A1-2016/100995
- WO-A1-2019/053389
- DE-A1- 102010 026 790

## Description

L'invention concerne une installation flottante solaire de conception modulaire. L'invention concerne encore un procédé de fabrication d'une telle installation, un procédé d'assemblage d'une telle installation, ainsi qu'un procédé de maintenance d'une telle installation.

### Domaine technique

La présente divulgation relève des installations solaires de conception modulaire notamment de celles formant un réseau flottant, support de panneaux photovoltaïques, et plus particulièrement de celles de grandes dimensions.

### Technique antérieure

De telles installations de conception modulaire, sont connues par exemple du document WO201213998 (A2), ou encore WO 2015092237(A1) de la présente Demanderesse. Ces technologies permettent la conception d'installations photovoltaïques de grandes dimensions, allant de quelques centaines de kilowatts à plusieurs dizaines de mégawatts, voire même plus.

Dans les deux cas, les composants modulaires de l'installation selon WO 201213998 (A2), WO 2015092237(A1) sont essentiellement des composants plastiques, obtenus par moulage, aisément à coût maîtrisé. En raison de la conception modulaire, les dispositifs flottants supports de panneaux photovoltaïques sont avantageusement de poids et d'encombrement limités, configurés pour être assemblés à partir du bord de la rive, sans outil de levage particulier tel que grue pour leur mise à l'eau, le réseau de dispositifs supports flottant étant typiquement poussé sur l'eau, à force d'homme, au fur et à mesure de son assemblage.

De manière notable, et selon les constatations de la Demanderesse, la flottabilité de telles installations est dimensionnée non seulement pour reprendre la charge verticale des composants qui la composent, mais plus encore pour reprendre la charge d'un ou plusieurs hommes, se déplaçant sur le réseau afin de réaliser la maintenance de l'installation. Ainsi, et telles qu'elles sont conçues et exploitées aujourd'hui, ces installations présentent de manière classique des allées de maintenance pour les opérateurs entre les différentes rangées de panneaux photovoltaïques.

Selon les constatation de la Demanderesse, la conception de telles installations solaires de conception modulaire ne permet pas de réduire le coût de matière en ce qu'elle oblige, pour la bonne réalisation de la maintenance, de surdimensionner la flottabilité de l'installation solaire par comparaison à ce qui serait strictement nécessaire physiquement pour reprendre la charge verticale des panneaux photovoltaïques, voire des onduleurs et câbles électriques, et des composants qui composent l'installation solaire flottante.

Le document US2017/0033732A1 décrit un tel état de la technique modulaire précité, et critique leur trop grande sensibilité au roulis, tangage, lacet, sensibilité qui serait due, selon cette antériorité, en ce les structures sont reliées mécaniquement entre elles à hauteur d'eau.

La solution proposée par ce document US2017/0033732A1 comprend des paires de lignes d'ancrage, reliées chacune à un corps mort sur le fond et à une bouée à son autre extrémité, assurant la mise en tension d'un élément de connexion, intermédiaire, entièrement immergé, sous forme d'un câble tendu s'étendant sous le niveau de l'eau, de manière globalement horizontale.

Les dispositifs supports flottants de panneau photovoltaïques, comprennent chacun une armature, autoportante, sur laquelle sont solidarisés une pluralité de flotteurs, en partie avant et arrière du dispositif.

Cette armature s'étend :
- en partie supérieure des flotteurs pour assurer le support et l'inclinaison de panneau
- en partie inférieure des flotteurs pour le support d'un aile immergée, destinée à limiter les mouvements de tangage et de roulis.

Des crochets sont pourvus en partie basse de l'armature, pour permettre la fixation des dispositifs supports flottant au câble tendu, qui s'étend de manière globalement horizontale, de manière immergée sous les armatures de différents dispositifs supports flottants.

Une telle conception permet ainsi de limiter la sensibilité des dispositif supports flottant au roulis, tangage, lacet par un câble maintenu en tension, s'étendant de manière immergée et de manière horizontale, et fixé à la partie basse des dispositifs supports flottant support de panneau, à des crochets en partie inférieure de l'armature des dispositifs.

La maintenance des panneaux est réalisée par bateau, qui peut être lié temporairement aux dispositifs supports flottants au moyen de tiges venant se fixer de manière amovible sur des équerres de fixation du dispositif support flottant.

L'installation solaire flottante selon US2017/0033732A1 présente une structure configurée pour travailler uniquement en tension, suivant la direction de câbles tendus et repose sur le maintien des dispositifs supports flottants par cette structure en tension, y compris lesdits câbles en tension, sensiblement horizontaux, immergés et fixés à des crochets en partie inférieure des armatures des dispositifs. Cela nécessite de tendre chaque câble par leurs deux extrémités à des corps morts. Selon les constatations des inventeurs, cette structure avec câbles en tension est de mise en œuvre particulièrement mal aisée, et ne permet pas de maintenir un grand nombre de dispositifs supports flottants de panneaux photovoltaïques. En particulier et contrairement aux installations modulaires précités, il n'est pas possible d'assembler le réseau de flotteurs depuis la berge, au sec, et dans les deux directions de l'espace, puis de pousser la structure au fur et à mesure de l'assemblage sur le sol car celle-ci ne comporte aucune résistance à la compression, suivant la direction des câbles.

On connait encore du document US2018/001975 A1 de former une installation solaire flottant de conception modulaire comprenant des dispositifs supports flottants comprenant chacun un flotteur, un moyen mécanique pour fixer un panneau photovoltaïque sur le flotteur.

De manière notable, des entretoises de forme de canal en U permettent de relier deux rangées de dispositifs flottants supports de panneaux, chaque entretoise étant immergée et de sorte à créer une voie navigable au travers des entretoise en U. Une plateforme de maintenance, à faible tirant d'eau, permet d'assurer la maintenance de l'installation solaire, lorsque les flotteurs de la plateforme de maintenance circulent le long des voies navigables.

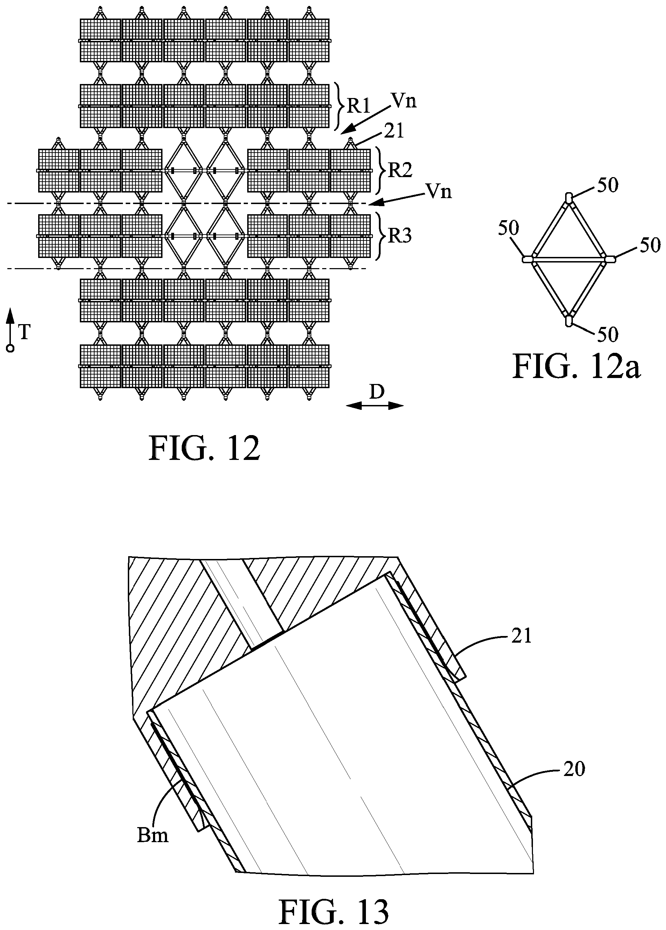

La structure du réseau de cette installation comprend ainsi lesdits flotteurs de base supports de panneaux photovoltaïques, qui s'étendent pour majeure partie au-dessus du niveau de l'eau, et les entretoises en forme de canal, en U, une telle structure flottant étant ancrée au fond par les bords du réseau, typiquement par des corps morts. De manière notable cette structure doit résister aux efforts de compression et de tension, engendrés en réaction aux conditions de l'environnement, tels que par exemple la houle ou le vent. Selon les constatations des inventeurs, la résistance structurelle, et la sensibilité à la déformation sous contrainte (lors d'un effort de traction ou de compression) d'une telle structure est médiocre, notamment en raison des entretoises en U qui, auront manifestement tendance à se déformer, notamment à flamber aisément, lorsque ces entretoises sont sollicitées en compression ou en tension, sauf à prévoir des liaisons mécaniques supplémentaires, flottantes, décrites au paragraphe 46 et illustrés aux figures 13A et 13B de l'antériorité US2018/0001975. Une telle liaison supplémentaire est prévue coulissante à ses extrémités à deux branches verticales du U, et est contrainte en position haute par la flottaison de la liaison. Elle est immergeable en position escamotée, basse pour permettre le passage d'un flotteur d'une plateforme de maintenance.

Comme bien visible de la figure 12 de cette antériorité US2018/0001975 A1 la structure assurant la transmission des efforts du réseau comprend non seulement les flotteurs des dispositifs flottants support des panneaux, sensiblement au niveau de l'eau (pour majeure partie non immergée) et les liaisons en canal, de forme en U (pour majeure partie immergée). Autrement dit une telle structure de réseau selon US2018/0001975 A1 s'étend en alternance, au-dessus de la surface de l'eau avec ses flotteurs, puis en dessous des flotteurs, avec les liaisons en U, et ainsi de suite.

Selon les constatations de le la Demanderesse, en raison de cette structure, il devient difficile d'assembler le réseau de flotteurs depuis la berge et dans les deux directions de l'espace, puis le pousser la structure au fur et à mesure de l'assemblage depuis la berge car celle-ci comporte les liaisons en U qui s'étendent en saillie sous les flotteurs qui ne peuvent pas alors reposer sur le sol, et en ce que les liaisons saillantes engendreraient des frottements importants s'opposant à la mise à l'eau par simplement glissement sur le sol.

On connaît encore du document WO 2014/136107 une installation solaire flottante, comprennent un treillis de cordes souples d'étendant en tension, intérieurement à une structure périphérique, rigide, éventuellement articulée, les cordes souples du treillis s'étendant globalement à l'horizontale, au-dessus du niveau de l'eau. Les cordes souples forment une pluralité de cellules polygonales présentant des nœuds à leurs sommets. Une pluralité de modules solaires flottants, indépendants sont agencés dans les cellules et fixés directement ou indirectement aux nœuds.

Certains des nœuds présentent des liaisons rigides en U ou en V, partiellement immergées, permettant la création d'une voie navigable entre deux rangées de modules. Les cordes en tension sont couplées aux extrémités du U, au-dessus de l'eau, alors que la partie médiane du U est immergée. Les voies navigables créées permettent la circulation d'une unité de maintenance comprenant deux coques et une passerelle.

Selon les constatations des inventeurs, et à l'instar du document US2017/0033732A1, WO 2014/136106 nécessite pour sa mise en œuvre la mise en tension de cordes, et plus particulièrement la constitution d'un treillis de cordes souples, avec nécessairement une mise en tension sur une structure périphérique. Selon les constatations de l'inventeur, un tel treillis de cordes en tension est de mise en œuvre particulièrement mal aisée.

A l'instar du document US2018/0001975 A1, WO 2014/136106 utilise pour la création des voies navigables des liaisons en U qui ne s'étendent pas dans le plan horizontal du treillis de cordes, mais en dessous du plan du treillis de corde pour former les voies navigables. Les efforts (de tension) de structure sont répartis en alternance, dans le plan horizontal du treillis de cordes, puis dans les U, en dessous du plan horizontal, et donc non contenus dans le plan horizontal, ce qui n'est pas idéal en termes de transmission des efforts. A l'instar du document US2018/0001975 A1, l'utilisation de liaisons en U partiellement immergées pour la création des voies navigables n'est pas idéale car de telle liaison U sont trop sensibles à la déformation dans le plan horizontal, et selon les constatations des inventeurs.

### Résumé

L'invention vient remédier à cette situation.

Plus particulièrement, le but de la présente invention est de proposer une installation, dont la conception modulaire permet d'assembler aisément et rapidement ladite installation, à partir de la berge, et en particulier non limitativement sans nécessiter de moyens de levage pour sa mise à l'eau, et dont la conception permet de réaliser la maintenance, sans nécessiter de surdimensionner la flottabilité de l'installation, et notamment par comparaison aux installations connues par exemple du document WO201213998 (A2) ou encore du document WO 2015092237(A1) dont la mise en œuvre d'une maintenance oblige à ce que la flottabilité de l'installation tienne compte de la reprise de la charge d'un ou plusieurs opérateurs effectuant la maintenance.

Plus particulièrement, au moins selon un mode de réalisation, le but de la présente invention est de proposer une installation, dont la conception modulaire, permet la réalisation de la maintenance, avec création de voies navigables en panneaux photovoltaïques, et de conception telle qu'elle autorise un assemblage rapide de ces modules, tout en étant résistante, et peu sensible à la déformation, lors des conditions de houles et de vent, avec une structure de réseau améliorée par rapport à celle divulguée par le document US2018/0001975 A1.

Un autre but de la présente invention est de proposer, au moins selon un mode de réalisation, une telle installation dont les modules qui la composent sont, à l'état désassemblé, aisément transportables et stockables, notamment en raison de leur poids et de leur encombrement limité.

Un autre but de la présente invention est de proposer une installation pourvue d'un module de service spécifiquement conçue pour la mise en œuvre d'une maintenance.

D'autres buts et avantages apparaitront de la description qui va suivre qui n'est donnée qu'à titre indicatif et qui n'a pas pour but de la limiter.

Aussi, la présente invention est relative à une installation solaire flottante support de panneaux photovoltaïques, résultant de l'assemblage de modules de structure et de modules flotteurs sur une étendue d'eau, formant un réseau flottant support de panneaux photovoltaïques, y compris :
- une première rangée de panneaux photovoltaïques,
- une deuxième rangée de panneaux photovoltaïques,

et dans laquelle la première rangée de panneaux photovoltaïques et la deuxième rangée de panneaux photovoltaïques s'étendent suivant une même direction longitudinale et sont espacées selon la direction transversale, perpendiculaire à la direction longitudinale, et dans laquelle au moins lesdits modules de structure assurent l'espacement entre la première rangée de panneaux photovoltaïques et la deuxième rangée de panneaux photovoltaïques sont configurés pour être immergés, permettant la circulation d'une unité de service flottante le long d'une voie navigable au-dessus desdits modules de structure
ladite structure du réseau, résultant de l'assemblage desdits modules de structure, rigides ou semi rigides, étant configurée pour travailler suivant les deux directions sensiblement du plan horizontal de la structure en résistant aux efforts de compression et aux efforts de traction auxquels est soumis ladite structure du réseau.

Selon la présente invention, la structure du réseau s'étend sensiblement suivant le plan horizontal, la structure pouvant comprendre ledit assemblage des modules de structure formant un treillis de poutres à maillage polygonal s'étendant suivant le plan horizontal, les poutres du treillis reprenant le motif polygonal du maillage, offrant des jours configurés pour refroidir les panneaux photovoltaïques situés au-dessus de la structure du réseau, le treillis de poutres étant configuré pour être immergé à demeure, ou alternativement au moins immergé localement sous la charge verticale de l'unité de service, et dans lequel des supports verticaux sont assujettis aux modules de structure en particulier solidaires des poutres du treillis, voire aux modules flotteurs, pour assurer l'entretoisement vertical des panneaux photovoltaïques par rapport au plan horizontal formant la structure du réseau de telle sorte que les efforts de compression/tension transitent dans les modules de structure, en étant contenus dans ledit plan horizontal de ladite structure du réseau. De préférence, la structure du réseau présente une assise plane, ladite structure du réseau étant configurée pour être sensiblement plane lorsqu'elle repose sur une surface plane.

Le treillis peut, par exemple, être à maillage triangulaire, ou encore présenter un maillage en losange, ou encore à maillage hexagonal (nid d'abeille). Le treillis peut être complet, voire incomplet, certaines des poutres étant manquantes, de préférence de manière régulière.

Les poutres du treillis peuvent être des poutres « longues », à savoir que les poutres sont de dimension supérieure au motif polygonal du maillage (en particulier aux côtés du motif par exemple triangulaire), ou encore de poutres « courtes », de dimension correspondant aux longueurs des côtés du polygone du motif polygonal du maillage du treillis.

Lorsque des poutres « courtes » sont utilisées des raccords peuvent être utilisés pour lier les poutres appartenant à un même module de structure, les poutres alors mises bout-à-bout au niveau des sommets du motif polygonal. Ces raccords peuvent, au moins pour certains présenter des oreilles saillantes, flexibles permettant l'assemblage entre les modules de structure entre eux pour former le treillis de la structure. Ces oreilles saillantes flexibles peuvent permettre à la structure en treillis de se déformer en dehors du plan horizontal formé par la structure, en particulier au niveau des sommets du polygone des motifs, en particulier sous la charge verticale de l'unité de service.

Lorsque les poutres du treillis sont des poutres « longues », à savoir que les poutres sont de dimension supérieure au motif polygonal (en particulier triangulaire) du maillage il peut être possible, au moins selon un mode de réalisation, d'obtenir un enfoncement local de la structure par le dimensionnement des poutres, qui peuvent alors présenter une flèche sous la charge verticale de l'opérateur (ou de l'unité de maintenance) pour que la structure s'enfonce localement dans l'eau au niveau de la charge verticale, et alors la portion de la structure de treillis à distance de la charge reste hors de l'eau.

La structure du réseau, qui s'étend suivant le plan horizontal peut être en appui sur la surface horizontale, directement notamment par les poutres du treillis, ou encore par l'intermédiaire des modules flotteurs, en particulier dans le cas où ils sont distincts des modules de structure.

Selon un mode de réalisation, la flottabilité de l'installation solaire est configurée pour que la structure du réseau, formée par le treillis de poutres à maillage polygonal (s'étendant suivant le plan horizontal) soit à demeure entièrement immergée avec présence d'une hauteur d'eau au-dessus des modules de structure de sorte à former une voie navigable entre la première rangée de panneaux photovoltaïques et la deuxième rangée de panneaux photovoltaïques, s'étendent suivant la direction longitudinale. A cet effet les modules de structure s'étendant suivant le plan horizontal peuvent être assujettis en dessous des modules flotteurs, afin de maintenir la structure du réseau (à savoir le treillis à maillage polygonal) à demeure entièrement immergée. Dans tous les cas, les panneaux photovoltaïques PV de l'installation sont maintenus hors de l'eau par les supports verticaux qui s'étendent à partir des poutres du treillis à maillage polygonal, voire des modules flotteurs.

Selon une autre possibilité, la flottabilité de l'installation est configurée de telle sorte que :
- la structure du réseau, formée par le treillis de poutres à maillage polygonal s'étendant suivant le plan horizontal est à hauteur d'eau lorsque la structure du réseau ne subit pas de charge verticale (substantielle) autre que celle des panneaux photovoltaïques,
- lesdits modules de structure sont immergés, au moins localement, sous la charge verticale d'une unité de service venant en appui verticale sur la structure du réseau, les panneaux photovoltaïques de l'installation étant alors maintenus hors de l'eau par les supports verticaux lors de l'enfoncement local par l'unité de service.

Selon ce mode de réalisation, la flottabilité de l'installation est de préférence insuffisante pour qu'un opérateur, homme ou femme, pesant entre 60 kg et 150 kg puisse marcher sur les poutres de la structure du treillis sans avoir les pieds dans l'eau en raison de l'enfoncement local de la structure. Autrement dit et lorsqu'un opérateur pesant entre 60 kg et 150kg marche sur la structure du réseau (à savoir le treillis à maillage polygonal), celle-ci s'enfonce dans l'eau et l'opérateur se retrouve les pieds dans l'eau.

Selon un mode de réalisation avantageux, la structure du réseau résultant de l'assemblage des modules de structure forme un treillis à maillage polygonal et en particulier à maillage triangulaire, notamment équilatéral ou isocèle, un maillage en losange ou encore hexagonal (en nid d'abeille).

Selon un mode de réalisation, la structure du réseau résulte de l'assemblage de dispositifs supports flottants, autoportants, chacun (ou au moins la plupart) support d'un panneau photovoltaïque, voire d'une pluralité de panneaux photovoltaïque, tels que deux ou trois, lesdits dispositifs supports flottants comprenant lesdits modules de structure, chaque module de structure des dispositifs supports flottants supportant le panneau photovoltaïque, voire la pluralité de panneaux photovoltaïques.

Notamment, le module de structure de chaque dispositif support flottant s'étend de manière débordante par rapport au panneau photovoltaïque, suivant la direction transversale, de sorte à créer la voie navigable entre la première rangée de panneaux photovoltaïques et la deuxième rangée des panneaux photovoltaïques.

Selon un mode de réalisation, le module de structure de chaque dispositif support flottant consiste en un motif du treillis à maillage polygonal, formant un polygone, par exemple un triangle notamment isocèle ou équilatéral ou encore un losange, des moyens de liaison assurant la fixation entre eux des modules de structure des dispositifs supports flottants, en particulier par les sommets des motifs polygonal du maillage.

Selon un mode de réalisation, le module de structure comporte des tubes, formant respectivement les côtés du polygone du motif polygonal, les tubes étant assemblés entre eux par des raccords aux sommets du polygone. Les raccords forment des renvois d'angle et peuvent être tubulaires aussi.

Selon un mode de réalisation, les moyens de liaison assurant la fixation entre eux des modules de structure des dispositifs comportant des oreilles saillantes des raccords, plusieurs oreilles étant mises en regards et traversées par un organe de verrouillage pour assurer la fixation entre desdits dispositifs supports flottants.

En particulier, les tubes peuvent former plusieurs enveloppes renfermant de manière étanche de l'air, ou encore sont remplis d'un matériau de densité inférieure à l'eau. Une étanchéité pouvant être obtenue par soudure étanche entre les raccords et les tubes, en particulier lorsque les tubes sont remplis d'air.

Il peut en particulier s'agir d'une soudure par induction, obtenue en soumettant à un rayonnement électromagnétique une bague métallisée, prévue intermédiaire entre une portée interne/externe du raccord et une portée externe/interne du tube, le tube et le raccord étant tous deux en matière plastique. Lorsque soumis au rayonnement électromagnétique, la bague métallisée est chauffée en température à une température supérieure à la température de fusion du plastique du raccord et du tube, provoquant leur soudure entre le plastique du raccord et celui du tube. La bague est de préférence ajourée, par exemple perforée régulièrement ou grillagée, pour favoriser le contact intime du plastique de la portée externe/interne du tube avec le plastique de la portée interne/externe du raccord au travers des perforations.

Selon un mode de réalisation, la structure du réseau (à savoir le treillis à maillage polygonal) est à hauteur d'eau, non entièrement immergée à demeure, sous la charge des panneaux photovoltaïques, et est configurée pour être immergée temporairement, et localement sous la charge verticale de l'unité de maintenance, par déformation des oreilles, flexibles.

Selon un autre mode de réalisation, les organes de verrouillage traversant les oreilles sont solidaires, en tout ou partie, des modules flotteurs positionnés au-dessus de la structure du réseau formé de l'assemblage de modules de structure afin de maintenir la structure du réseau (le treillis à maillage polygonal) à demeure immergée.

Selon un mode de réalisation, le motif polygonal du treillis est un polygone à N côtés, N modules de structure distincts étant assemblés par leurs extrémités formant respectivement les côtés du polygone du treillis à motif polygonal. Les modules de structure (à savoir les poutres « courtes ») peuvent être assemblés par des oreilles à leurs extrémités mises en regard et traversées par des organes de verrouillage.

Selon un mode de réalisation, les modules de flotteurs sont assujettis à tout ou partie des modules de structure, ces derniers étant non flottants en soi. Par exemple la structure du réseau résultant de l'assemblage des modules de structure est non flottante en soi, la flottabilité de l'installation assurée par lesdits modules flotteurs prévus comme des éléments distincts des modules de structure, et dans laquelle les panneaux photovoltaïques au moins de la première rangée de panneaux photovoltaïques et/ou ou de la deuxième rangée de panneaux sont solidaires des modules flotteurs, par l'intermédiaire des support verticaux reliant directement le panneaux photovoltaïque et le module flotteur.

Selon une autre possibilité, les modules de structure combinent une fonction de modules flotteurs, et peuvent être ainsi constitués par des mêmes éléments, à savoir par les poutres tubulaires, voire les raccords, qui peuvent renfermer un volume d'air de matière étanche voire contenir un matériau de densité inférieure à l'eau.

Selon la présente divulgation, les supports verticaux sont assujettis aux modules de structure (ou au modules flotteurs) pour assurer l'entretoisement vertical des panneaux photovoltaïques par rapport au plan horizontal formant la structure du réseau. Par exemple les modules de structure et les supports verticaux sont assemblés par un couple nervure d'accrochage /rainure d'accrochage. Lorsque les poutres du treillis sont des tubes, les tubes peuvent être typiquement obtenus par extrusion, avec possiblement l'obtention de la nervure d'accrochage/rainure d'accrochage lors de l'extrusion, par une filière d'extrusion présentant le dessin de la nervure/rainure.

Selon un mode de réalisation, les poutres du treillis sont des tubes de longueur correspond aux côtés du motif polygonale du treillis et assemblés entre eux par des raccords aux sommets du motif polygonal.

En particulier, les modules flotteurs peuvent être formés par les tubes des modules de structure qui forment des enveloppes étanches renfermant de l'air de manière étanche, éventuellement avec leur raccord ou encore sont remplis d'un matériau de densité inférieure à l'eau.

Selon un mode de réalisation, l'installation comprend une troisième rangée de panneaux photovoltaïques, consécutive à la première et la deuxième rangée de panneaux photovoltaïque, et dans laquelle la deuxième rangée de panneaux photovoltaïques et la troisième rangée de panneaux photovoltaïques s'étendent chacune suivant une même direction longitudinale et sont espacées selon la direction transversale , perpendiculaire à la direction longitudinale par les modules du structure et dans laquelle lesdits modules de structure assurant l'espacement entre la deuxième rangée de panneaux photovoltaïques et la troisième rangée de panneaux photovoltaïques sont configurés pour être immergés formant une voie navigable suivant la direction longitudinale entre la deuxième rangée de panneaux photovoltaïques et la troisième rangée de panneaux photovoltaïques permettant la circulation d'une unité de service flottante, les modules de structure s'étendant sensiblement suivant le plan horizontal en de telle sorte que les efforts de compression/tension transitent dans la structure, en étant contenus dans ledit plan horizontal de ladite structure du réseau.

Selon un mode de réalisation, ladite installation est équipée d'une unité de service flottante, configurée pour circuler le long de la voie navigable entre la première rangée de panneaux photovoltaïques et la seconde rangée de panneaux photovoltaïques

L'unité de service peut comprendre :
- une première coque et une deuxième coque espacées entre elles suivant l'écartement entre les deux voies navigables séparant respectivement la première rangée de panneaux photovoltaïques et la deuxième rangée de panneaux photovoltaïques d'une part, et la seconde rangée de panneaux photovoltaïques et la troisième rangée de panneaux photovoltaïques, d'autre part, la première coque étant configurée pour circuler dans la voie navigable entre la première rangée de panneaux photovoltaïques et la deuxième rangée de panneaux photovoltaïques, la deuxième coque configurée pour circuler dans la voie navigable entre la deuxième rangée de panneaux photovoltaïques et la troisième rangée de panneaux photovoltaïques
- une passerelle, joignant la première coque et la deuxième coque entre elles, et configurée pour venir à cheval sur les panneaux photovoltaïques de la deuxième rangée de panneaux photovoltaïques lorsque l'unité de service circule selon la direction longitudinale.

Selon un mode de réalisation, la passerelle comprend une fenêtre.

Selon un mode de réalisation, l'unité flottante est configurée pour circuler le long de la voie navigable au-dessus des modules de structure en entretoisement entre la première rangée de panneaux photovoltaïques et la deuxième rangée de panneaux photovoltaïques, voire le long de la voie navigable au-dessus des modules de structure en entretoisement entre la deuxième rangée de panneaux photovoltaïques et la troisième rangée de panneaux photovoltaïques, en provoquant l'enfoncement local de la structure du réseau, par appui sur lesdits modules de structure, en particulier par appui sur les poutres du treillis à maillage polygonal.

Selon un mode de réalisation, tout ou partie des modules de flotteur et des modules de structure sont des éléments métalliques, plastiques ou composites obtenus par moulage ou extrusion, ou encore résultent de l'assemblage d'éléments métallique, composite ou plastiques obtenus par moulage ou extrusion.

La présente invention concerne encore un procédé de fabrication des modules de structure d'une installation selon la présente invention, installation dans laquelle les poutres du treillis sont des tubes de longueur correspond aux côtés du motif polygonal du treillis et assemblés entre eux par des raccords aux sommets du motif polygonal et dans laquelle les modules flotteurs sont formés par les tubes des modules de structure qui forment des enveloppes étanches renfermant de l'air de manière étanche, avec leur raccord, et procédé dans lequel on obtient les modules de structure formant les motif polygonaux du treillis à maillage polygonale de la structure du réseau par assemblage des tubes, plastiques de longueur correspondant aux côtés du motif polygonal du treillis à maillage polygonal, les tubes étant mis bout à bout par des raccords, plastiques, tubulaires au sommets des motifs polygonaux et assemblés par soudure étanche entre des portées internes/externes des raccords et des portées externes/internes des tubes pour former respectivement les modules de structure.

La soudure peut être une soudure par induction obtenue en soumettant à un rayonnement électromagnétique une bague métallisée, de préférence ajourée, prévue intermédiaire entre une portée interne/externe du raccord et une portée externe/interne du tube.

La présente divulgation concerne encore un procédé d'assemblage d'une installation selon la présente divulgation, dans lequel on assemble les modules de structure obtenus par le procédé de fabrication modules de structure par une mise en regard d'oreilles saillantes des raccords, plusieurs oreilles étant mises en regard et traversées par des organes de verrouillage des modules de structure au niveau des sommets des motifs polygonaux du treillis de la structure du réseau.

La présente divulgation concerne encore un procédé d'assemblage d'une installation selon la présente divulgation dans lequel on assemble les modules de structures modules flotteurs et les panneaux photovoltaïques entre eux sur la berge de l'étendue d'eau, en poussant la structure du réseau support de panneaux photovoltaïques au fur et à mesure de son assemblage.

La présente invention concerne en encore un procédé de maintenance d'une installation selon la présente invention, dans lequel ladite installation est équipée d'une unité de service U flottante, configurée pour circuler le long de la voie navigable (Vn) entre la première rangée (R1) de panneaux photovoltaïques et la seconde rangée (R2) de panneaux photovoltaïques et dans lequel on assure la maintenance de l'installation grâce à l'unité de service (U) circulant dans la ou les voie(s) navigable(s) entre les panneaux photovoltaïques (PV),
et dans lequel en particulier ladite installation comprenant une troisième rangée (R3) de panneaux photovoltaïques, consécutive à la première et la deuxième rangée de panneaux photovoltaïque, et dans laquelle la deuxième rangée (R2) de panneaux photovoltaïques et la troisième rangée (R3) de panneaux photovoltaïques s'étendent chacune suivant une même direction longitudinale (D) et sont espacées selon la direction transversale (T), perpendiculaire à la direction longitudinale par les modules du structure et dans laquelle lesdits modules de structure assurant l'espacement entre la deuxième rangée (R2) de panneaux photovoltaïques et la troisième (R3) rangée de panneaux photovoltaïques sont configurés pour être immergés formant une voie navigable (Vn) suivant la direction longitudinale (D) entre la deuxième rangée (R2) de panneaux photovoltaïques et la troisième rangée (R3) de panneaux photovoltaïques permettant la circulation d'une unité de service (U) flottante, les modules de structure s'étendant sensiblement suivant le plan horizontal en de telle sorte que les efforts de compression/tension transitent dans la structure, en étant contenus dans ledit plan horizontal de ladite structure du réseau
et installation dans laquelle l'unité de service (U) comprend :
   - une première coque (C1) et une deuxième coque (C2) espacées entre elles suivant l'écartement entre les deux voies navigables (Vn) séparant respectivement la première rangée (R1) de panneaux photovoltaïques et la deuxième rangée (R2) de panneaux photovoltaïques d'une part, et la seconde rangée (R2) de panneaux photovoltaïques et la troisième rangée (R3) de panneaux photovoltaïques, d'autre part, la première coque (C1) étant configurée pour circuler dans la voie navigable entre la première rangée (R1) de panneaux photovoltaïques et la deuxième rangée (R2) de panneaux photovoltaïques, la deuxième coque (C2) configurée pour circuler dans la voie navigable entre la deuxième rangée (R2) de panneaux photovoltaïques et la troisième rangée (R3) de panneaux photovoltaïques
   - une passerelle, joignant la première coque (C1) et la deuxième coque (C2) entre elles,
et configurée pour venir à cheval sur les panneaux photovoltaïques (PV) de la deuxième rangée (R2) de panneaux photovoltaïques lorsque l'unité de service circule selon la direction longitudinale (L),
et dans lequel, possiblement, l'unité flottante est configurée pour circuler le long de la voie navigable au-dessus des modules de structure en entretoisement entre la première rangée (R1) de panneaux photovoltaïques et la deuxième rangée (R2) de panneaux photovoltaïques, voire le long de la voie navigable au-dessus des modules de structure en entretoisement entre la deuxième rangée (R2) de panneaux photovoltaïques et la troisième rangée (R3) de panneaux photovoltaïques, en provoquant l'enfoncement local de la structure du réseau, par appui sur lesdits modules de structure.

### Brève description des dessins

D'autres caractéristiques, détails et avantages apparaîtront à la lecture de la description détaillée ci-après, et à l'analyse des dessins annexés, sur lesquels :
**Fig. 1**

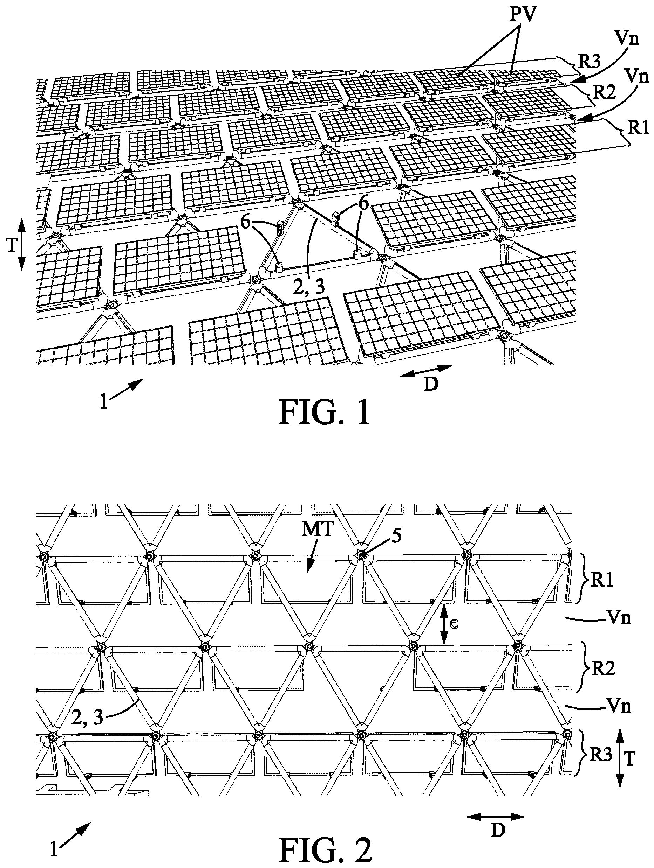

   [Fig. 1] est en vue de perspective d' une installation solaire flottante dont la structure du réseau forme un treillis à maille triangulaire, résultant de l'assemblage des modules de structure de dispositifs supports flottants, chacun supportant un panneau photovoltaïque, chaque module de structure formant un motif triangulaire du treillis, les dispositifs supports flottants étant assemblés entre eux par les sommets du triangle de chaque motif triangulaire, les tubes des modules de structure assurant la flottabilité de l'installation, les modules de structure formant les modules flottants, la flottabilité de l'installation étant configurée de sorte que les modules de structure sont à hauteur d'eau lorsque soumis à la charge des panneaux photovoltaïques, et configurés pour s'enfoncer au moins localement sous la charge verticale d'une unité de service flottante en formant au moins une voie navigable entre la première rangée de panneaux photovoltaïques et la deuxième rangée de panneaux photovoltaïques, voire une voie navigable entre la deuxième rangée de panneaux, et une troisième rangée de panneaux photovoltaïque, voire plus généralement pour une installation à nombre entier de N rangées de panneaux photovoltaïque, une voie navigable entre la rangée d'entier k et k+1 lorsque k est compris entre 2 et N-1
**Fig. 2**
   [Fig. 2] est une vue de dessous de la figure 1 illustrant le treillis à maille triangulaire, résultant de l'assemblage des modules de structure et suivant un plan sensiblement horizontal.
**Fig. 3**

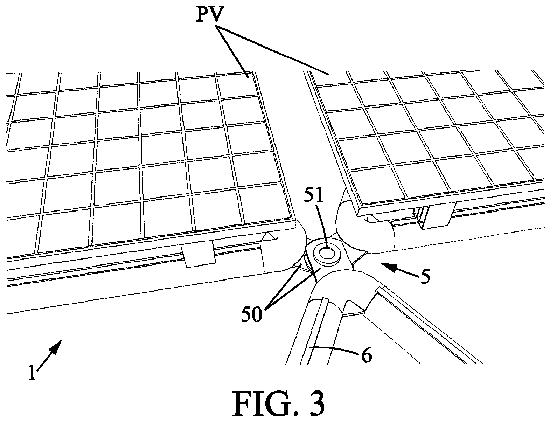

   [Fig. 3] est une vue de détail illustrant la fixation entre les sommets des modules de structure des dispositifs supports flottants de l'installation de la figure 1.
**Fig. 4**

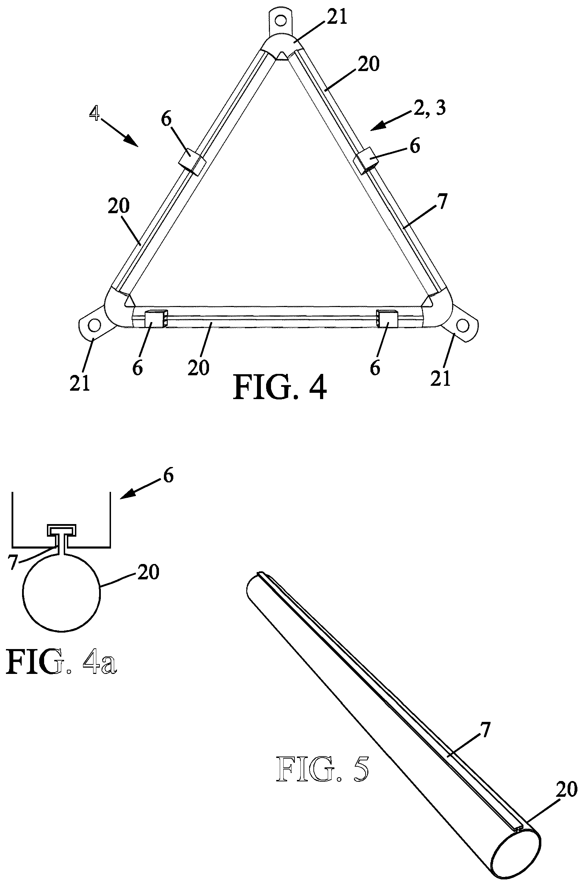

   [Fig. 4] est une vue de détail d'un dispositif support flottant de l'installation selon la figure 1
**Fig. 4a**
   [Fig. 4a] est une vue de détail du couple nervure d'accroche/rainure d'accroche assurant la fixation entre le support vertical et un tube du module de structure
**Fig. 5**
   [Fig. 5] est une vue de détail du tube formant un côté triangulaire du module de structure, qui peut être obtenu par extrusion, y compris avec sa nervure d'accroche.
**Fig. 6**

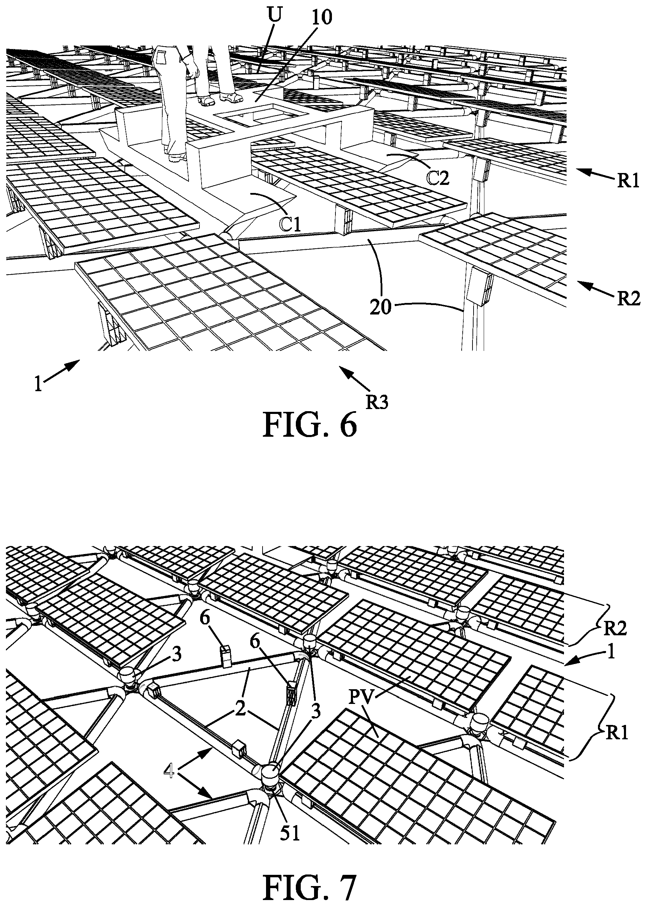

   [Fig. 6] est vue de l'installation flottante solaire, y compris l'unité de service comprenant une première coque configurée pour circuler dans la voie navigable entre la première rangée de panneaux photovoltaïques et la deuxième rangée de panneaux photovoltaïques au-dessus des modules de structure, et une deuxième coque configurée pour circuler dans la voie navigable entre la deuxième rangée de panneaux photovoltaïques et la troisième rangée de panneaux photovoltaïques au-dessus des modules de structure, ainsi qu'une passerelle joignant la première coque et la deuxième coque entre elles, et configurée pour venir à cheval sur les panneaux photovoltaïques de la deuxième rangée de panneaux photovoltaïques lorsque l'unité de service circule selon la direction longitudinale.
**Fig. 7**
   [Fig. 7] est une vue d'une installation solaire flottante selon un selon mode de réalisation, se différentiant de celle de la figure 1 en ce que la structure du réseau, s'étendant suivant le plan horizontal, formée par les modules de structure triangulaire est entièrement immergée à demeure, la flottabilité de l'installation assurée au moyen de modules flotteurs, situés au-dessus de la structure du réseau, solidaires des organes de verrouillage, traversant les oreilles de raccords des modules de structure pour assurer la fixation des dispositifs supports flottant entre eux.
**Fig. 8**

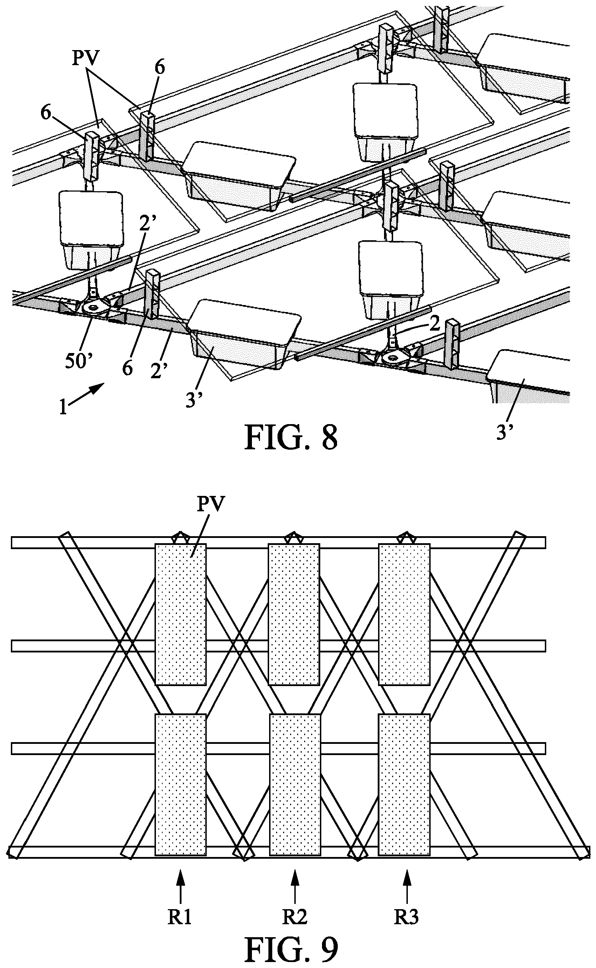

   [Fig. 8] est vue en perspective d'une installation flottante solaire selon un troisième mode de réalisation, dont la structure du réseau est à maillage triangulaire, chaque motif triangulaire du maillage étant formé par trois modules de structure assemblés par leurs extrémités vis des oreilles des modules de structure, mises en regard et traversées par des organes de verrouillage.
**Fig. 9**
   [Fig. 9] est vue schématique d'une installation flottante solaire selon un quatrième mode de réalisation, dont la structure du réseau est à maillage triangulaire, résultant de l'assemblage de poutres longues, et selon une autre orientation possible des rangées de panneaux photovoltaïques par rapport aux motifs triangulaires du réseau
**Fig. 10**

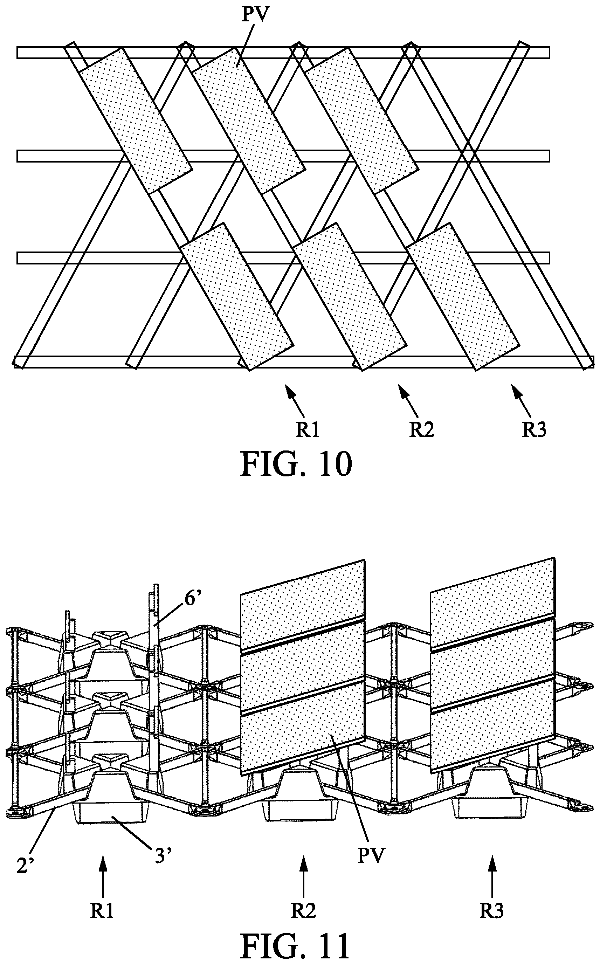

   [Fig. 10] est vue schématique d'une installation flottante solaire selon un cinquième mode de réalisation, dont la structure du réseau est à maillage triangulaire, résultant de l'assemblage de poutres longues, et selon encore une autre orientation possible des rangées de panneaux photovoltaïques par rapport aux motifs triangulaires du réseau
**Fig. 11**
   [Fig. 11] est vue schématique d'une installation flottante solaire selon un sixième mode de réalisation, dont la structure du réseau est un treillis à maillage triangulaire, résultant de l'assemblage de poutres formant les côtés du motif triangulaire, la structure du réseau étant en soi non flottante, la flottabilité de l'installation étant assurée par des modules flotteurs, solidaires du treillis, notamment enchâssés au treillis chaque module flotteur présentant notamment des rainures, notamment en croix, où s'étendent longitudinalement, les poutres du treillis, les panneaux photovoltaïques des différentes rangées de flotteurs étant solidaires des modules flotteurs, par l'intermédiaire de support verticaux.
**Fig. 12**
   [Fig. 12] est en vue de perspective d'une installation solaire flottante dont la structure du réseau forme un treillis à maille en losange, résultant de l'assemblage des modules de structure de dispositifs supports flottants, chacun supportant un panneau photovoltaïque, chaque module de structure formant un motif en losange du treillis, les dispositifs supports flottants étant assemblés entre eux par les sommets du losange de chaque motif en losange, les tubes des modules de structure assurant la flottabilité de l'installation, les modules de structure formant les modules flottants, la flottabilité de l'installation étant configurée de sorte que les modules de structure sont à hauteur d'eau lorsque soumis à la charge des panneaux photovoltaïques, et configurés pour s'enfoncer au moins localement sous la charge verticale d'une unité de service flottante en formant au moins une voie navigable entre la première rangée de panneaux photovoltaïques (qui est une rangée double) et la deuxième rangée de panneaux photovoltaïques (qui est une rangée double) , voire une voie navigable entre la deuxième rangée de panneaux, et une troisième rangée de panneaux photovoltaïque (qui est une rangée double), voire plus généralement pour une installation à nombre entier de N rangées de panneaux photovoltaïque, une voie navigable entre la rangée d'entier k et k+1 lorsque k est compris entre 2 et N-1.
**Fig. 12a**
   [Fig. 12a] est une vue schématique du module de structure formant un motif en losange du motif d'un dispositif support flottant, configuré pour supporter deux panneaux (« duo pitch »).
**Fig. 13**
   [Fig. 13] est vue de coupe, selon un plan passant par l'axe du tube, illustrant la soudure entre la portée externe d'un tube, et la portée interne d'un raccord, via une bague métallisée intercalaire, configurée pour la mise en œuvre d'une soudure par induction entre la plastique de la portée interne et de la portée externe.
**Fig. 14**

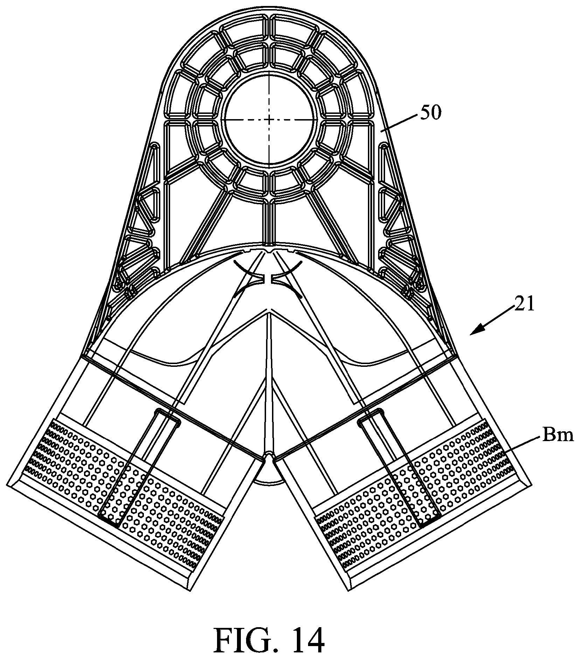

   [Fig. 14] est une vue de coupe, selon un plan de coupe vertical, d'un raccord d'un module de structure d'une installation, le raccord étant en plastique comprenant un corps tubulaire formant un renvoi d'angle à 60° (pour le cas particulier d'un triangle équilatéral), y compris une première portée interne pourvue d'une première bague métallisée en insert, surmoulée, la portée interne destinée à la réception d'une portée externe d'un premier tube, ainsi qu'une deuxième portée interne pourvue d'une deuxième bague métallisée en insert, surmoulée, destinée à la réception d'une portée externe d'un deuxième tube, inclinée à 60° par rapport au premier tube, les bagues métallisées -première bague métallisée et deuxième bague métallisée- étant perforées configurées pour assurer la fusion du plastique de la portée interne du raccord et de la porte externe du tube, au traverse des perforations des bagues.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente divulgation est relative à une installation solaire flottante 1 support de panneaux photovoltaïques PV, résulte de l'assemblage de modules de structure 2 ; 2' et de modules flotteurs 3 ; 3' sur une étendue d'eau, formant un réseau flottant support de panneaux photovoltaïques, y compris:
- une première rangée R1 de panneaux photovoltaïques,
- une deuxième rangée R2 de panneaux photovoltaïques,
et dans laquelle la première rangée R1 de panneaux photovoltaïques et la deuxième rangée R2 de panneaux photovoltaïques s'étendent suivant une même direction longitudinale D et sont espacées selon la direction transversale T, perpendiculaire à la direction longitudinale.

Selon la présente divulgation, au moins lesdits modules de structure 2 assurent l'espacement entre la première rangée R1 de panneaux photovoltaïques et la deuxième R2 rangée de panneaux photovoltaïques et sont configurés pour être immergés, au moins localement et/ou temporairement, permettant la circulation d'une unité de service U flottante le long d'une voie navigable Vn au-dessus desdits modules 2 de structure.

Selon la présente divulgation, ladite structure du réseau, résulte de l'assemblage desdits modules de structure 2, rigide ou semi rigide, ladite structure étant configurée pour travailler suivant les deux directions (non parallèles) sensiblement du plan horizontal de la structure en résistant aux efforts de compression et aux efforts de traction auxquels est soumis ladite structure du réseau.

Selon la présente divulgation, la structure du réseau s'étend sensiblement suivant le plan horizontal de telle sorte que les efforts de compression/tension transitent dans les modules de structure 2, en étant contenus dans ledit plan horizontal de ladite structure du réseau.

De manière notable, au moins selon un mode de réalisation, la structure du réseau présente une assise plane, ladite structure du réseau étant configurée pour être sensiblement plane lorsqu'elle repose sur une surface plane.

Selon la présente divulgation, la structure du réseau résultant de l'assemblage des modules de structure 2 forme un treillis à maillage polygonal. Ce treillis à maillage polygonal s'étend sensiblement suivant le plan horizontal de la structure du réseau.

La structure du réseau, peut être ancrée au fond (ou à la berge) au moyen de lignes d'ancrage, reliant ladite structure du réseau à des corps morts, ou encore à des pieux.

Selon un mode de réalisation, la flottabilité de l'installation solaire 1 est configurée pour que la structure du réseau, s'étendant suivant le plan horizontal est à demeure entièrement immergée avec présence d'une hauteur d'eau au-dessus des modules de structure 2 de sorte à former une voie navigable entre la premier rangée R1 de panneaux photovoltaïques et la deuxième rangée R2 de panneaux photovoltaïques, s'étendent suivant la direction longitudinale D. Un tel mode de réalisation est illustré à titre indicatif à la figure 7. Bénéficier d'une structure de réseau entièrement immergée à demeure permet avantageusement de filtrer au moins une partie des rayons UV, voire de lisser les variations de température auxquelles est soumis la structure du réseau, et comparativement, à une structure de réseau dont les modules de structure sont à l'air libre.

A cet effet, les modules de structure 2 s'étendant suivant le plan horizontal sont assujettis en dessous des modules flotteurs 3, afin de maintenir la structure du réseau à demeure entièrement immergée.

Alternativement, la flottabilité de l'installation est configurée de telle sorte que la structure du réseau s'étendant suivant le plan horizontal est configurée pour être à hauteur d'eau lorsque la structure du réseau ne subit pas de charge verticale substantielle autre que celle des panneaux photovoltaïques, voire des lignes électriques.

Par ailleurs, et dans un tel cas, la flottabilité de l'installation est configurée de telle sorte que lesdits modules de structure 2 sont immergés, au moins localement, temporairement sous la charge verticale d'une unité de service U venant en appui verticale sur la structure du réseau. Selon cette autre possibilité, la voie navigable Vn entre la première rangée R1 de panneaux photovoltaïques et la deuxième rangée R2 de panneaux photovoltaïque, avec hauteur d'eau au-dessus des modules de structure n'est assurée que par enfoncement de la structure du réseau par l'unité de service U.

Par ailleurs, et de manière notable, la flottabilité de l'installation peut être insuffisante pour qu'un opérateur, homme ou femme, pesant entre 60 kg et 150 kg puisse marcher sur les poutres de la structure du treillis sans avoir les pieds dans l'eau en raison de l'enfoncement local de la structure. Autrement dit, et lorsque l'opérateur marche sur les poutres du treillis, celle-ci s'enfoncent localement, l'opérateur se retrouvant les pieds dans l'eau.

Cet enfoncement local peut résulter du dimensionnement des poutres, qui présentent une flèche sous la charge verticale de l'opérateur (ou de l'unité de maintenance) pour que la structure s'enfonce localement dans l'eau au niveau de la charge verticale, et alors la portion de la structure de treillis à distance de la charge reste hors de l'eau. Un tel mode de réalisation est particulièrement adapté lorsque les poutres du treillis sont des poutres « longues », par exemple selon les figures 9 et 10, à savoir que les poutres sont de dimension supérieure au motif polygonal (en particulier triangulaire) du maillage.

Cet enfoncement local peut encore résulter du fait que le structure du treillis présente des zones flexibles, en particulier au niveau des sommets du polygone du maillage.

Dans tous les cas, et même lorsque la structure du réseau est enfoncée par l'unité de maintenance, les panneaux photovoltaïques PV de l'installation solaire sont maintenus hors de l'eau, notamment par l'intermédiaire de support verticaux 6, reliant les modules de structure 2, 2' aux panneaux photovoltaïques, ou encore notamment par l'intermédiaire de support verticaux 6' reliant les panneaux photovoltaïques PV au modules flotteurs 3' (lorsque ceux-ci sont prévus comme des éléments distincts des modules de structure), et comme illustré à titre d'exemple à la figure 11.

. Les poutres du treillis peuvent être des poutres « longues », par exemple selon, à savoir que les poutres sont de dimension supérieure au motif polygonal (en particulier triangulaire) du maillage par exemple selon les exemples des figures 9 et 10, ou encore de poutres « courtes », en particulier sous forme de tubes, de dimension correspondant la longueur d'un côté du polygone du motif de mailles du treillis, par exemple selon les exemples des figures 1 à 7, 8 et 12.

Lorsque des poutres « courtes » sont utilisées des raccords 21 sont utilisées pour liées les poutres de la trémie au niveau des sommets du motif polygonal. Ces raccords 21 comportent au moins deux portées internes (ou alternativement externes) coopérant avec des portées externes (ou alternativement internes) appartenant à deux poutres consécutives du motif polygonal. Ces raccords peuvent encore porter des oreilles 50. Ces oreilles 50 peuvent permettent ainsi à la structure en treillis de se déformer, en particulier au niveau des sommets du motif polygonal.

Le motif du maillage peut être un polygone, en particulier un polygone régulier, ou irrégulier. Le polygone peut être un rectangle, en particulier un carré, un losange, ou encore un triangle en particulier isocèle voire équilatéral, ou encore un motif en nid d'abeille (hexagonal). Le treillis peut être complet (sans poutre manquante), ou incomplet comme illustré à la figure 12. Les figures 1 à 8 illustrent plusieurs modes de réalisation pour lesquels le treillis est à maillage triangulaire, le polygone étant un triangle, notamment équilatéral ou isocèle. La figure 12 illustre un treillis à maillage en losange, avec un dispositif support flottant présentant un module de structure formant un motif en losange. Une poutre de renfort peut joindre deux sommets opposés du losange comme illustré à la figure 12a.

On remarque que les poutres du treillis reprenant le motif polygonal du maillage, offrent des jours (vides), notamment de tailles conséquentes, qui peuvent permettre, de réduire le poids de la structure, voire de refroidir efficacement les panneaux photovoltaïques situés au-dessus de la structure du réseau, en particulier par les phénomènes de convection d'air entre l'eau et les panneaux photovoltaïques, et même lorsque les modules de structure ne sont pas immergés à demeure sous le poids des panneaux photovoltaïques.

Les différentes rangées de panneaux (première rangée R1, deuxième rangée R2, troisième rangée R3) peuvent être portées, par les rangées consécutives des différents motifs polygonaux. La dimension des motifs polygonaux selon la direction transversale T est surabondante afin de créer l'inter-espace formant voie navigable Vn entre deux rangées de panneaux photovoltaïques R1, R2 ; R2, R3, (et plus généralement Rk, Rk+1), entre deux rangées consécutives de motifs polygonaux, chacune portant une rangée de panneaux photovoltaïque.

Les rangés R1, R2, et plus généralement Rk peuvent être des rangées de panneaux simples comme illustrés aux figures 1 à 11, ou des rangées de panneaux multiple, par exemple double, comme illustré à la figure 12. Ainsi, à la figure 1, chaque membre de la rangée est un duo de panneaux photovoltaïque, en particulier « duo pitch », à savoir que les deux panneaux du membre présentent des inclinaisons opposées.

Selon un mode de réalisation, la structure du réseau résulte de l'assemblage de dispositifs supports flottants 4, autoportants, chacun support d'un panneau photovoltaïque, en particulier comme illustré à la figure 1, voire chacun support d'un nombre limité de panneaux, tel que deux panneaux photovoltaïques comme illustrée à la figure 12a et 12 ou caque motif en losange porte un duo de panneaux (duo pitch), ou trois panneaux photovoltaïques. Chaque support comprend lesdits modules de structure 2, chaque module de structure 2 supportant ledit panneau photovoltaïque PV. Un tel mode de réalisation est illustré pour l'installation flottante des figures 1 à 6 lorsque la structure du réseau n'est pas à demeure entièrement immergée, mais seulement par enfoncement provoqué par l'unité de service comme visible à la figure 6, et encore à la figure 7, lorsque la structure du réseau est entièrement immergée et à demeure.

On remarque que le module de structure 2 de chaque dispositif support flottant 4 s'étend de manière débordante par rapport au panneau photovoltaïque PV, suivant la direction transversale T, de sorte à créer la voie navigable Vn entre la première rangée R1 de panneaux photovoltaïques et la deuxième rangée R2 des panneaux photovoltaïques.

Chaque dispositif support flottant 4 peut consister (en termes de structure du réseau), en un motif du treillis à maillage polygonal, formant un polygone, notamment régulier ou irrégulier, tel qu'un triangle notamment équilatéral ou isocèle (par exemple illustré à la figure 2), ou encore un losange à la figure 12a. Des moyens de liaison 5 assurent la fixation entre eux des modules de structure 2 des dispositifs supports flottants 4, en particulier via leurs sommets.

Selon un mode de réalisation, le module de structure 2 du dispositif support flottant 4 comporte des tubes 20, formant respectivement les côtés du polygone du motif polygonal, les tubes 20 étant assemblés entre eux par des raccords 21 aux sommets du polygone.

Les tubes peuvent former un ou plusieurs enveloppes renfermant de manière étanche de l'air, ou encore être remplis d'un matériau de densité inférieure à l'eau. Une étanchéité peut être obtenue par soudure étanche entre les raccords et les tubes en particulier dans le cas où les tubes sont remplis avec de l'air. Dans un tel cas le module de structure 2, tubulaire combine la fonction de module flotteur 3 (et sont donc constitués par les mêmes éléments), la structure du réseau étant à hauteur d'eau, non entièrement immergée à demeure, sous la charge des panneaux photovoltaïques, mais uniquement immergée temporairement sous la charge verticale de l'unité de maintenance.

Alternativement, et selon le mode de réalisation notamment visible à la figure 7, les modules de structure 2 tubulaire n'assurent pas la flottabilité de l'installation et sont entièrement immergés à demeure sous la charge des panneaux photovoltaïques de l'installation.

A cet effet, des modules flotteurs 3, positionnés au-dessus des modules de structure, solidaires des modules de structure 2, assurent la flottabilité de l'installation avec maintien des panneaux photovoltaïques PV hors de l'eau, tout en maintenant la structure du réseau entièrement immergée, à avoir le treillis de poutres à motif polygonal.

Les moyens de liaison 5 assurent la fixation entre eux des modules de structure des dispositifs supports flottantes, et peuvent autoriser un léger mouvement angulaire entre les dispositifs supports flottants, la structure du réseau étant ainsi déformable sous les contraintes de la houle.

Les moyens de liaison 5 peuvent ainsi comporter des oreilles saillantes 50 des raccords 21, plusieurs oreilles 50 étant mises en regards et traversées par un organe de verrouillage 51 pour assurer la fixation entre lesdits dispositifs supports flottants 4.

Lorsque la structure du réseau est à hauteur d'eau sous la charge des panneaux photovoltaïque, les oreilles 50 peuvent être flexibles, de sorte à obtenir l'enfoncement local de la structure sous la charge de l'unité de maintenance.

Selon un mode de réalisation, les organes de verrouillage 51 traversant les oreilles 50 sont solidaires en tout ou partit de modules flotteurs 3 positionnés au-dessus de la structure du réseau formé de l'assemblage de module de structure 2. Tel qu'enseigné par WO2019053389 (A1) de la présente Demanderesse, les modules flotteurs 1 peuvent par exemple être constitués en tout ou partie par des enveloppes plastiques renfermant un volume d'air, présentant un goulot 11 avec une ouverture, obturée par un bouchon

Les oreilles 51 sont alors mises en regard pour l'assemblage des modules de structure 2 entre eux. Les modules flotteurs 2 sont configurés de sorte que l'assemblage des oreilles mises en regard est obtenu en tout ou partie par l'insertion du goulot (orienté vers le bas) au travers des oreilles le bouchon non présent, puis verrouillage de l'assemblage par la mise en place du bouchon obturant l'ouverture du goulot. Une fois le bouchon verrouillé, les oreilles sont maintenues entre deux butées formées par un épaulement à la base du goulot et un épaulement du bouchon. Les modules flotteurs peuvent être obtenus en matière plastique par injection soufflage ou extrusion soufflage.

Les modules flotteurs 3' peuvent encore être enchâssés avec les modules de structure 2', qui peuvent alors être non flottants, comme visible à titre d'exemple à la figure 8, ou encore à la figure 11. Dans un tel cas, on remarque que les efforts de compression/extension du réseau, transitent dans le plan vertical de la structure du réseau, mais sans transiter dans les modules flotteurs 3'.

A la figure 8, on remarque que le module flotteur 3' est enchâssé à un module de structure 3 formant une poutre d'un côté motif, par exemple par surmoulage.

A la figure 11, on remarque que le ou chaque module flotteur 3' comprend des rainures en croix en sur-profondeur de sa paroi supérieure, où s'étendent longitudinalement, les poutres du treillis, de sorte qu'un nœud du treillis peut se trouver à l'intersection des rainures.

On remarque que les panneaux photovoltaïques des différentes rangées de flotteurs sont solidaires des modules flotteurs, par l'intermédiaire de support verticaux 6.

Selon un mode de réalisation de la présente divulgation on peut assembler les modules de structure 2 desdits dispositifs supports flottants 4 et les panneaux photovoltaïques PV entre eux sur la berge de l'étendue d'eau, en poussant la structure du réseau support de panneaux photovoltaïques au fur et à mesure de son assemblage. Selon un mode de réalisation, un tel assemblage peut être assuré sans moyens de levage pour la mise à l'eau de l'installation solaire flottante

Selon un mode de réalisation, par exemple visible à la figure 8 le motif polygonal du treillis est un polygone à N côtés, par exemple un triangle notamment équilatéral ou isocèle. N modules de structure 2' (par exemple trois modules de structure sont assemblés dans le cas d'un triangle) sont alors assemblés par leurs extrémités, en formant respectivement les côtés du polygone du treillis à motif polygonal. Les modules de structure 2' sont assemblés par exemple via des oreilles 50' à leurs extrémités, les oreilles 50' mises en regard et traversées par des organes de verrouillage. Dans un tel mode de réalisation selon la figure 8, chaque panneau photovoltaïque PV est supporté par plusieurs modules de structure 2' distincts, et non un seul module de structure2 comme à la figure 1 Les modules de flotteur 3' peuvent être assujettis à tout ou partie des modules de structure 2' notamment par l'intermédiaire de support comme visible à la figure 8. Selon une autre possibilité les panneaux sont solidaires des modules flotteurs 3'.

Selon un mode de réalisation, des supports verticaux 6 sont assujettis aux modules de structure 2, 2' pour assurer l'entretoisement vertical des panneaux photovoltaïques PV par rapport au plan horizontal formant la structure du réseau.

Les modules de structure 2, 2' et les supports verticaux 6 peuvent par exemple être assemblés par un couple nervure d'accrochage 7/rainure d'accrochage. La nervure d'accrochage 7 (ou rainure d'accrochage) peut être portée par tout ou partie des tubes 20 des modules de structure, obtenue notamment lors de l'extrusion du tube 20. Tout ou partie des supports verticaux 6, peuvent être des profilés, la rainure d'accrochage (ou nervure d'accrochage) obtenue par extrusion du profilé.

Selon un mode de réalisation, illustré à titre d'exemple à la figure 9 ou 10, le treillis formant la structure du réseau, résulte de l'assemblage de modules de structure sous forme de poutres longues, au moins en partie, à savoir que la poutre longue est de dimension supérieure au motif polygonal (en particulier triangulaire). La structure de la structure du réseau est alors sensiblement rigide, voire à tout le moins peut présenter une souplesse des poutres adaptée pour permettre un enfoncement local lorsque la structure est seulement immergée sous une charge verticale, et peut encore nécessiter des moyens de levage pour sa mise à l'eau. De manière générale, différentes orientations des rangées de panneaux R1, R2, R2 peuvent être envisagées par rapport aux motifs de la structure du réseau, les figures 9 et 10 donnant deux orientations possibles à titre d'exemples non limitatifs, autre que l'orientation des rangées de panneaux illustrée aux figures précédentes.

Selon la présente divulgation, la structure du réseau présente une assise plane, ladite structure du réseau étant configurée pour être sensiblement plane lorsqu'elle repose sur une surface plane.

De préférence, la structure du réseau présente une assise plane, qui peut venir en appui :
- directement sur la surface horizontale, comme par exemple pour les modes de réalisations des figures 1 à 7,
- indirectement sur la surface horizontale, par l'intermédiaire des modules flotteurs 3'comme par exemple pour les modes de réalisations des figures 8 et 11.

Selon un mode de réalisation, ladite installation solaire flottante comprend une troisième rangée R3 de panneaux photovoltaïques, consécutive à la première et la deuxième rangée de panneaux photovoltaïque, et dans laquelle la deuxième rangée R2 de panneaux photovoltaïques et la troisième rangée R3 de panneaux photovoltaïques s'étendent chacune suivant une même direction longitudinale D et sont espacées selon la direction transversale T, perpendiculaire à la direction longitudinale par les modules du structure 2.

Lesdits modules de structure 2 assurent l'espacement entre la deuxième rangée R2 de panneaux photovoltaïques et la troisième R3 rangée de panneaux photovoltaïques sont configurés pour être immergés formant une voie navigable Vn suivant la direction longitudinale D entre la deuxième rangée R2 de panneaux photovoltaïques et la troisième rangée R3 de panneaux photovoltaïques permettant la circulation d'une unité de service U flottante, les modules de structure 2 en entretoisement s'étendant sensiblement suivant le plan horizontal de telle sorte que les efforts de compression/tension transitent dans la structure, en étant contenus dans ledit plan horizontal de ladite structure du réseau

De manière générale, l'installation solaire flottante peut comprendre un nombre entier N de rangées de panneaux photovoltaïques supérieur à trois, les panneaux de chaque rangée de panneaux photovoltaïques s'étendant suivant la direction longitudinale L, et étant espacées suivant la direction transversale T par les modules de structure formant la structure du réseau qui s'étend sensiblement suivant le plan horizontal. D'une manière générale, des voies navigables Vn sont prévues au-dessus des modules de structure 2,2' entre les rangées de panneaux photovoltaïques de rangs k-1 et k pour k compris entre 2 et N et afin d'assurer la maintenance des panneaux des différentes rangées de rangs 1 à N.

Selon un mode de réalisation, l'installation solaire flottante est équipée d'une unité de service U flottante, configurée pour circuler le long de la voie navigable Vn entre la premier rangée R1 de panneaux photovoltaïques et la seconde rangée R2 de panneaux photovoltaïques, voire plus généralement entre la rangée de rang k-1 er k lorsque k est compris entre 2 et N.

Selon un mode de réalisation l'unité de service U comprend une première coque C1 et une deuxième coque C2 espacées entre elles suivant l'écartement entre les deux voies navigables Vn séparant respectivement la première rangée R1 de panneaux photovoltaïques et la deuxième rangée R2 de panneaux photovoltaïques d'une part, et la seconde rangée R2 de panneaux photovoltaïques et la troisième rangée R3 de panneaux photovoltaïques, d'autre part.

La première coque C1 est configurée pour circuler dans la voie navigable entre la première rangée R1 de panneaux photovoltaïques et la deuxième rangée R2 de panneaux photovoltaïques, la deuxième coque C2 configurée pour circuler dans la voie navigable entre la deuxième rangée R2 de panneaux photovoltaïques et la troisième rangée R3 de panneaux photovoltaïques.

Une passerelle 10, joint la première coque C1 et la deuxième coque C2 entre elles, et est configurée pour venir à cheval sur les panneaux photovoltaïques PV de la deuxième rangée R2 de panneaux photovoltaïques lorsque l'unité de service circule selon la direction longitudinale L.

De manière générale, la première coque C1 peut circuler le long de la voie navigable entre la rangée de rang k-1 et k, et la deuxième coque peut circuler simultanément le long de la voie navigable entre la rangée de panneaux photovoltaïques de rang k et k+1 lorsque k est compris entre 2 et N-1.

On remarque que la passerelle 10 peut comprend une fenêtre F, donnant accès au panneau photovoltaïque PV positionné sous la passerelle pour l'opérateur présent sur la passerelle 10.

Selon un mode de réalisation, l'unité flottante est configurée pour circuler le long de la voie navigable au-dessus des modules de structure 2 ; 2' en entretoisement entre la première rangée R1 de panneaux photovoltaïques et la deuxième rangée R2 de panneaux photovoltaïques, voire le long de la voie navigable au-dessus des modules de structure 2 ; 2' en entretoisement entre la deuxième rangée R2 de panneaux photovoltaïques et la troisième rangée R3 de panneaux photovoltaïques, voire plus généralement entre la rangée de panneau k et k+1 en provoquant l'enfoncement local de la structure du réseau, par appui sur lesdits modules de structure 2, 2 '

La présente divulgation concerne encore un procédé de fabrication d'une telle installation ; dans lequel tout ou partie des modules de flotteur 3, 3' et des modules de structure 2,2' sont des éléments métalliques, plastiques ou composites obtenus par moulage ou extrusion, ou encore résultent de l'assemblage d'éléments métallique, composite ou plastiques obtenus par moulage ou extrusion.

En particulier la présente invention concerne un procédé de fabrication des modules de structure d'une installation avec tubes 20 et raccords 21 dans lequel on obtient les modules de structure 2 formant des motifs polygonaux du treillis à maillage polygonale de la structure du réseau par assemblage des tubes 20, plastiques de longueur correspondant aux côtés du motif polygonal du treillis à maillage polygonal, les tubes étant mis bout-à-bout par les raccords 21, plastiques, tubulaires au sommets des motifs polygonaux et assemblés par soudure étanche entre des portées internes/externes des raccords 21 et des portées externes/internes des tubes 20 pour former les modules de structure.

La soudure peut être avantageusement une soudure par induction obtenue en soumettant à un rayonnement électromagnétique une bague métallisée Bm, prévue intermédiaire entre une portée interne/externe du raccord 21 et une portée externe/interne du tube 20.

La Figure 14 divulgue à titre d'exemple une vue de coupe d'un tel raccord 21. De manière générale, il peut s'agit d'un raccord comportant un corps tubulaire formant un renvoi d'angle, par exemple à 60° sur la figure 14 avec au moins deux portées, internes (ou externes). Les tubes, par exemple cylindriques présentent des portées externes (ou internes) qui sont emboitées dans les portées du corps tubulaire.

Sur la figure 14, on remarque la présence de deux bagues métallisées Bm qui peuvent être surmoulées en insert dans le corps du renvoi d'angle, notamment lors du moulage par injection du raccord 21, et par exemple surmoulées les deux portées internes du raccord. Ces bagues Bm sont ajourées/perforée, et permettent la mise en œuvre de la soudure par induction.

Pour procéder on emboîte le tube 20 dans le raccord 21, avec un recouvrement de la portée interne et de la portée externe (tubulaires) du raccord 21 et du tube 20, la bague métallisée Bm alors positionnée intermédiaire entre les portées interne/externe, puis on soumet l'assemblage à un champ électromagnétique provoquant la mise en température de la bague métallisée à une température égale voire supérieure à la température de fusion du plastique. On obtient une soudure étanche entre la portée interne et la portée externe sur la toute la périphérie du tube avec fusion du plastique au travers des perforations de la bague métallisée Bm.

Avantageusement, ce procédé de fabrication peut être mise en œuvre à proximité du site de pose de l'installation solaire flottante, en ce qu'il requière peu de matériel pour sa mise en œuvre. Cela permet avantageusement de transporter les composants de l'installation en kit comprenant essentiellement à l'état désassemblé, des tubes (notamment avec nervure/rainure d'accrochage), des raccords 21, et des supports verticaux 6, qui peuvent être déplacés, transportés et stockés aisément, en raison de leur faible encombrement.

Par exemple, et lorsque le module de structure est un motif polygonal sous forme d'un polygone en particulier un triangle équilatéral, tous les raccords 21 peuvent être identiques avec un renvoi d'angle à 60° et les tubes 20 également identiques, et notamment de même longueur, ce qui est très avantageux

La présente divulgation concerne encore un procédé d'assemblage d'une installation, dans lequel on assemble les modules de structure 2 obtenus par le procédé de fabrication par une mise en regards d'oreilles saillantes 50 des raccords 21, plusieurs oreilles 50 étant mises en regards et traversées par des organes de verrouillage 51 des modules de structure au niveau des sommets des motifs polygonaux du treillis de la structure du réseau.

La présente divulgation concerne encore un procédé d'assemblage d'une installation selon la présente divulgation, dans lequel on assemble les modules de structure 2 ; 2', voire les modules flotteurs 3 ; 3' et les panneaux photovoltaïques PV entre eux sur la berge de l'étendue d'eau, en poussant la structure du réseau support de panneaux photovoltaïques au fur et à mesure de son assemblage.

La présente divulgation concerne encore un procédé de maintenance d'une installation selon la présente divulgation, dans lequel on assure la maintenance de l'installation grâce à l'unité de service U circulant dans la ou les voie(s) navigable(s) entre les panneaux photovoltaïques PV.

### Avantages

L'installation selon la présente divulgation est avantageuse par rapport à celles enseignés par les document WO201213998 (A2) ou encore du document WO 2015092237(A1) dont la mise en œuvre d'une maintenance oblige à ce que la flottabilité de l'installation tienne compte de la reprise de la charge d'un ou plusieurs opérateurs effectuant la maintenance : La structure du réseau de l'installation selon la présente divulgation est de conception plus légère et nécessite moins de matière notamment plastique pour sa mise en œuvre.

L'installation selon la présente divulgation est encore avantageuse par rapport à l'enseignement du document US2017/0033732A1 en ce qu'elle peut, au moins selon un mode de réalisation, être assemblée aisément et rapidement ladite installation à partir de la berge, et par exemple, à titre d'exemple sans nécessiter de moyens de levage pour sa mise à l'eau.

L'installation la présente divulgation ne nécessite pas, à l'instar du document US2017/0033732A1, ou encore WO 2014/136107, de tendre un réseau de câbles en tension, sensiblement à l'horizontale, pour sa mise en œuvre en ce que le treillis de poutres formant la structure de l'installation selon la présente divulgation peut travailler en compression, et contrairement à la structure de câbles de ces antériorités.

La structure de treillis de poutres de installation selon la présente divulgation s'étend sensiblement selon un plan horizontal, les efforts étant contenus dans ce plan horizontal : elle ne nécessite donc pas de liaisons en U, à l'instar des documents US2018/0001975 A1 ou encore WO 2014/136107 qui ont besoin de ces liaisons en U pourassurer la création des voies navigables tout en assurant un changement de plan des efforts transitant dans la structure, au niveau de chaque voie navigable.

L'installation selon la présente divulgation est encore avantageuse par rapport à l'enseignement du document US2018/0001975 A1 en ce que la structure du réseau présente une assise plane permettant de pousser la structure du réseau support de panneaux photovoltaïques notamment formée de dispositifs supports flottants, au fur et à mesure de son assemblage sur la berge ou rivage, en glissant la structure du réseau, voire les dispositifs supports flottants de l'installation, et contrairement à la structure du réseau formé par le document US2018/0001975, qui présente des liaisons en U saillantes en dessous de la surface des flotteurs des dispositifs supports flottant de panneaux, ces liaisons saillantes empêchant les dispositifs supports flottant de reposer au sol, en engendrant des frottements importants incompatibles avec un tel mode de mise à l'eau.

Selon un mode de réalisation avantageux, l'installation solaire flottante peut être obtenue aisément et rapidement par un kit comprenant trois types de composant, à savoir des raccords 21, des tubes 20, et des supports verticaux 60 à l'état désassemblé, ce qui est particulièrement peu encombrant et facilite le stockage et le transport.

### Liste des signes de référence

1 : Installation solaire flottante,
10. Passerelle
PV. Panneaux photovoltaïques,
U Unité de service,
C1, C2. Coques (Première et deuxième)
L. Direction longitudinale,
R1 Première rangée de panneaux photovoltaïques
R2 Deuxième rangée de panneaux photovoltaïques
R3. Troisième rangée de panneaux photovoltaïques
T. Direction transversale,
F. Fenêtre (passerelle)

### Mode de réalisation des figures 1 à 7

2. Modules de structure,
3. Modules flotteurs
4. Dispositifs supports flottants,
5. Moyens de liaison (entre dispositifs supports flottants)
20. Tubes,
21. Raccords ;
50. Oreilles (moyens de fixation)
51. Organes de verrouillage

### Mode de réalisation de la figure 8

2'. Modules de structure,
3'. Modules de flotteur.
50'. Oreilles (moyens de fixation).

## Revendications

1. Installation solaire flottante (1) support de panneaux photovoltaïques (PV), résultant de l'assemblage de modules de structure (2 ; 2') et de modules flotteurs (3 ; 3') sur une étendue d'eau, formant un réseau flottant support de panneaux photovoltaïques, comprenant :
- une première rangée (R1) de panneaux photovoltaïques,
- une deuxième rangée (R2) de panneaux photovoltaïques,
et dans laquelle la première rangée (R1) de panneaux photovoltaïques et la deuxième rangée (R2) de panneaux photovoltaïques s'étendent suivant une même direction longitudinale (D) et sont espacées selon la direction transversale (T), perpendiculaire à la direction longitudinale, et dans laquelle au moins lesdits modules de structure (2) assurant l'espacement entre la première rangée (R1) de panneaux photovoltaïques et la deuxième (R2) rangée de panneaux photovoltaïques sont configurés pour être immergés, permettant la circulation d'une unité de service (U) flottante le long d'une voie navigable (Vn) au-dessus desdits modules (2) de structure
ladite structure du réseau, comprenant un assemblage desdits modules de structure (2), rigides ou semi rigides, étant configurée pour travailler suivant les deux directions sensiblement du plan horizontal de la structure en résistant aux efforts de compression et aux efforts de traction auxquels est soumis ladite structure du réseau,
**caractérisé en ce que** la structure du réseau s'étend sensiblement suivant le plan horizontal, la structure étant formée par ledit assemblage des modules de structure (2) formant un treillis de poutres à maillage polygonal, en particulier le treillis est à maillage triangulaire, hexagonal ou en losange, s'étendant suivant le plan horizontal, les poutres du treillis reprenant le motif polygonal du maillage, offrant des jours configurés pour refroidir les panneaux photovoltaïques situés au-dessus de la structure du réseau, le treillis de poutres formant la structure étant configuré pour être immergé à demeure, ou alternativement immergé au moins localement sous la charge verticale de l'unité de service (U) et dans lequel des supports verticaux (6, 6')) sont assujettis aux modules de structure (2, 2') en particulier au poutres, voire aux modules flotteurs, pour assurer l'entretoisement vertical des panneaux photovoltaïques (PV) par rapport au plan horizontal formant la structure du réseau en assurant le maintien des panneaux photovoltaïques (PV) hors de l'eau, la structure formée par le treillis de poutres à maillage polygonal étant configurée de telle sorte que les efforts de compression/tension transitent dans les modules de structure (2), en étant contenus dans ledit plan horizontal de ladite structure du réseau..

2. Installation solaire flottante selon la revendication 1 dans laquelle la flottabilité de l'installation solaire (1) est configurée pour que la structure du réseau formée par le treillis de poutres à maillage polygonal s'étendant suivant le plan horizontal est à demeure entièrement immergée avec présence d'une hauteur d'eau au-dessus des modules de structure (2) de sorte à former une voie navigable entre la première rangée (R1) de panneaux photovoltaïques et la deuxième rangée (R2) de panneaux photovoltaïques, s'étendant suivant la direction longitudinale (D), les panneaux photovoltaïques (PV) de l'installation étant maintenus hors de l'eau par les support verticaux (6), et dans laquelle dans laquelle les modules de structure (2) formant le treillis de poutres à maillage_polygonal s'étendant suivant le plan horizontal sont assujettis en dessous des modules flotteurs (3), afin de maintenir la structure du réseau à demeure entièrement immergée .

3. Installation solaire flottante selon la revendication 1 dans laquelle la flottabilité de l'installation est configurée de telle sorte que :
- la structure du réseau formée par le treillis de poutres à maillage polygonal s'étendant suivant le plan horizontal est à hauteur d'eau lorsque la structure du réseau ne subit pas de charge verticale substantielle autre que celle des panneaux photovoltaïques,
- lesdits modules de structure (2) sont immergés, au moins localement, sous la charge verticale d'une unité de service (U) venant en appui vertical sur la structure du réseau, les panneaux photovoltaïques (PV) de l'installation étant maintenus hors de l'eau les support verticaux (6) lors de l'enfoncement local par l'unité de service (U) et dans laquelle en particulier la flottabilité de l'installation est insuffisante pour qu'un opérateur, homme ou femme, pesant entre 60 kg et 150 kg puisse marcher sur les poutres de la structure du treillis sans avoir les pieds dans l'eau en raison de l'enfoncement local de la structure.

4. Installation solaire flottante selon l'une des revendications 1 à 3 dans laquelle la structure du réseau résulte de l'assemblage de dispositifs supports flottants (4), autoportants, chacun ou au moins la plupart support d'un panneau photovoltaïque, voire de plusieurs panneaux tel que deux panneaux ou trois panneaux photovoltaïques, lesdits dispositifs supports flottants comprenant lesdits modules de structure (2), chaque module de structure (2) des dispositifs supports flottants (4) supportant le panneau photovoltaïque (PV), voire lesdits plusieurs panneaux photovoltaïque et dans laquelle le module de structure (2) de chaque dispositif support flottant (4) s'étend de manière débordante par rapport au panneau photovoltaïque (PV), suivant la direction transversale (T), de sorte à créer la voie navigable (Vn) entre la première rangée (R1) de panneaux photovoltaïques et la deuxième rangée (R2) des panneaux photovoltaïques.

5. Installation solaire flottante selon le revendication 4, dans laquelle le module de structure (2) de chaque dispositif support flottant (4) consiste en un motif du treillis à maillage polygonal, formant un polygone, des moyens de liaison (5) assurant la fixation entre eux des modules de structure (2) et des dispositifs supports flottants (4) et dans laquelle en particulier le module de structure (2) comporte des tubes (20), formant respectivement les côtés du polygone du motif polygonal, les tubes (20) étant assemblés entre eux par des raccords (21) aux sommets du polygone.

6. Installation selon la revendication 5 dans laquelle les tubes (20) forment plusieurs enveloppes renfermant de manière étanche de l'air, ou encore sont remplis d'un matériau de densité inférieure à l'eau.

7. Installation solaire flottante selon la revendication 3 prise en combinaison avec la revendication 5, dans laquelle les moyens de liaison (5) assurant la fixation entre eux des modules de structure des dispositifs comportant des oreilles saillantes (50) des raccords (21), plusieurs oreilles (50) étant mises en regards et traversées par un organe de verrouillage (51) pour assurer la fixation entre desdits dispositifs supports flottant (4) et dans laquelle la structure du réseau étant à hauteur d'eau, non entièrement immergée à demeure, sous la charge des panneaux photovoltaïques, configurée pour être immergée temporairement, et localement sous la charge verticale de l'unité de service (U), par déformation des oreilles (50), flexibles.

8. Installation selon l'une des revendications 4 à 7, dans lequel le motif du treillis à maillage polygonal formant le module de structure de chaque dispositif flottant est un triangle, en particulier un triangle isocèle ou équilatéral, par exemple adapté pour le support d'un panneau photovoltaïque, ou encore un losange par exemple adapté pour le support de deux panneaux photovoltaïques, présentant notamment des inclinaisons opposées.

9. Procédé de fabrication des modules de structure d'une installation selon l'une des revendications 1 à 8, installation dans laquelle les poutres du treillis sont des tubes (20) de longueur correspond aux côtés du motif polygonal du treillis et assemblés entre eux par des raccords (21) aux sommets du motif polygonal et dans laquelle les modules flotteurs (3) sont formés par les tubes (20) des modules de structure qui forment des enveloppes étanches renfermant de l'air de manière étanche, avec leur raccord (21)et procédé dans lequel on obtient les modules de structure (2) formant des motifs polygonaux du treillis à maillage polygonale de la structure du réseau par assemblage des tubes (20), plastiques de longueur correspondant aux côtés du motif polygonal du treillis à maillage polygonal, les tubes étant mis bout à bout par des raccords (21), plastiques, tubulaires au sommets des motifs polygonaux et assemblés par soudure étanche entre des portées internes/externes des raccords (21) et des portées externes/internes des tubes (20) pour former les modules de structure.

10. Procédé de maintenance d'une installation selon l'une des revendications 1 à 9 , dans lequel ladite installation est équipée d'une unité de service U flottante, configurée pour circuler le long de la voie navigable (Vn) entre la première rangée (R1) de panneaux photovoltaïques et la seconde rangée (R2) de panneaux photovoltaïques et dans lequel on assure la maintenance de l'installation grâce à l'unité de service (U) circulant dans la ou les voie(s) navigable(s) entre les panneaux photovoltaïques (PV),
et dans lequel en particulier ladite installation comprenant une troisième rangée (R3) de panneaux photovoltaïques, consécutive à la première et la deuxième rangée de panneaux photovoltaïque, et dans laquelle la deuxième rangée (R2) de panneaux photovoltaïques et la troisième rangée (R3) de panneaux photovoltaïques s'étendent chacune suivant une même direction longitudinale (D) et sont espacées selon la direction transversale (T), perpendiculaire à la direction longitudinale par les modules du structure (2) et dans laquelle lesdits modules de structure (2) assurant l'espacement entre la deuxième rangée (R2) de panneaux photovoltaïques et la troisième (R3) rangée de panneaux photovoltaïques sont configurés pour être immergés formant une voie navigable (Vn) suivant la direction longitudinale (D) entre la deuxième rangée (R2) de panneaux photovoltaïques et la troisième rangée (R3) de panneaux photovoltaïques permettant la circulation d'une unité de service (U) flottante, les modules de structure (2) s'étendant sensiblement suivant le plan horizontal en de telle sorte que les efforts de compression/tension transitent dans la structure, en étant contenus dans ledit plan horizontal de ladite structure du réseau
et installation dans laquelle l'unité de service (U) comprend :
- une première coque (C1) et une deuxième coque (C2) espacées entre elles suivant l'écartement entre les deux voies navigables (Vn) séparant respectivement la première rangée (R1) de panneaux photovoltaïques et la deuxième rangée (R2) de panneaux photovoltaïques d'une part, et la seconde rangée (R2) de panneaux photovoltaïques et la troisième rangée (R3) de panneaux photovoltaïques, d'autre part, la première coque (C1) étant configurée pour circuler dans la voie navigable entre la première rangée (R1) de panneaux photovoltaïques et la deuxième rangée (R2) de panneaux photovoltaïques, la deuxième coque (C2) configurée pour circuler dans la voie navigable entre la deuxième rangée (R2) de panneaux photovoltaïques et la troisième rangée (R3) de panneaux photovoltaïques
- une passerelle (10), joignant la première coque (C1) et la deuxième coque (C2) entre elles, et configurée pour venir à cheval sur les panneaux photovoltaïques (PV) de la deuxième rangée (R2) de panneaux photovoltaïques lorsque l'unité de service circule selon la direction longitudinale (L),
et dans lequel, possiblement, l'unité flottante est configurée pour circuler le long de la voie navigable au-dessus des modules de structure (2 ; 2') en entretoisement entre la première rangée (R1) de panneaux photovoltaïques et la deuxième rangée (R2) de panneaux photovoltaïques, voire le long de la voie navigable au-dessus des modules de structure (2 ; 2') en entretoisement entre la deuxième rangée (R2) de panneaux photovoltaïques et la troisième rangée (R3) de panneaux photovoltaïques, en provoquant l'enfoncement local de la structure du réseau, par appui sur lesdits modules de structure (2, 2 ').

## Patentansprüche

1. Schwimmende Solaranlage (1) zur Halterung von Photovoltaikmodulen (PV),
resultierend aus der Anordnung von Strukturmodulen (2; 2') und Schwimmmodulen (3; 3') auf einer Wasserfläche, die ein schwimmendes Netz zur Halterung von Photovoltaikmodulen bilden, umfassend:
- eine erste Reihe (R1) von Photovoltaikmodulen,
- eine zweite Reihe (R2) von Photovoltaikmodulen,
und wobei sich die erste Reihe (R1) von Photovoltaikmodulen und die zweite Reihe (R2) von Photovoltaikmodulen in derselben Längsrichtung (D) erstrecken und in Querrichtung (T), senkrecht zur Längsrichtung, zueinander beabstandet sind, und wobei wenigstens die Strukturmodule (2), die den Abstand zwischen der ersten Reihe (R1) von Photovoltaikmodulen und der zweiten Reihe (R2) von Photovoltaikmodulen gewährleisten, dazu ausgebildet sind, eingetaucht zu werden, wodurch die Zirkulation einer schwimmende Serviceeinheit (U) entlang einer Wasserstraße (Vn) über den Strukturen (2) ermöglicht wird,
wobei die Netzstruktur, die eine Anordnung der starren oder halbstarren Strukturmodule (2) umfasst, dazu ausgebildet ist, im Wesentlichen in beiden Richtungen der horizontalen Ebene der Struktur zu arbeiten und den Druckund Zugkräften standzuhalten, denen die Netzstruktur ausgesetzt ist,
**dadurch gekennzeichnet, dass** sich die Netzstruktur im Wesentlichen in der horizontalen Ebene erstreckt, wobei die Struktur durch die Anordnung der Strukturmodule (2) gebildet wird, die ein Gitter aus Trägern mit polygonalem Maschenbild bilden, wobei insbesondere das Gitter dreieckig, sechseckig oder rautenförmig ist, und sich in der horizontalen Ebene erstreckt, wobei die Träger des Gitters das polygonale Muster der Maschen wieder aufnehmen und Öffnungen aufweisen, die zur Kühlung der über der Netzstruktur angeordneten Photovoltaikmodule ausgebildet sind, wobei das die Struktur bildende Trägergitter dazu ausgebildet ist, dauerhaft oder alternativ wenigstens lokal unter der vertikalen Last der Serviceeinheit (U) eingetaucht zu werden, und wobei vertikalen Stützen (6, 6') an den Strukturmodulen (2, 2'), insbesondere an den Trägern oder sogar an den Schwimmmodulen, befestigt sind, um die vertikale Abstützung der Photovoltaikmodule (PV) in Bezug auf die horizontale Ebene, die die Netzstruktur bildet, zu gewährleisten und die Photovoltaikmodule (PV) über Wasser zu halten, wobei die durch das Gitter aus Trägern mit polygonalem Maschenbild gebildete Struktur so ausgebildet ist, dass die Druck-/Zugkräfte in den Strukturmodulen (2) übertragen werden und in der genannten horizontalen Ebene der genannten Netzstruktur enthalten sind.

2. Schwimmende Solaranlage nach Anspruch 1, wobei der Auftrieb der Solaranlage (1) so ausgebildet ist, dass die durch das sich in der horizontalen Ebene erstreckende Gitter aus Trägern mit polygonalem Maschenbild gebildete Netzstruktur vollständig unter Wasser bleibt, wobei eine Wasserhöhe über den Strukturmodulen (2) vorhanden ist, so dass zwischen der ersten Reihe (R1) von Photovoltaikmodulen und der zweiten Reihe (R2) von Photovoltaikmodulen ein Wasserweg gebildet wird, sich in Längsrichtung (D) erstreckend, wobei die Photovoltaikmodule (PV) der Anlage durch vertikale Stützen (6) über dem Wasser gehalten werden, und wobei die Strukturmodule (2), die das sich in der horizontalen Ebene erstreckende Gitter aus Trägern mit polygonalem Maschenbild bilden, unterhalb der Schwimmmodule (3) befestigt sind, um die Netzstruktur vollständig unter Wasser zu halten.

3. Schwimmende Solaranlage nach Anspruch 1, wobei der Auftrieb der Anlage so ausgebildet ist, dass:
- sich die Netzstruktur, die durch das sich in der horizontalen Ebene erstreckende Gitter aus Trägern mit polygonalem Maschenbild gebildet wird, auf Höhe des Wasserspiegels befindet, wenn die Netzstruktur keiner wesentlichen vertikalen Belastung außer derjenigen der Photovoltaikmodule ausgesetzt ist,
- die genannten Strukturmodule (2) wenigstens lokal unter der vertikalen Last einer Serviceeinheit (U) untertauchen, die vertikal auf der Netzstruktur aufliegt, wobei die Photovoltaikmodule (PV) der Anlage beim lokalen Eintauchen durch die Serviceeinheit (U) durch die vertikalen Stützen aus dem Wasser gehalten werden (6) und wobei insbesondere der Auftrieb der Anlage nicht ausreicht, damit ein weiblicher oder männlicher Bediener mit einem Gewicht zwischen 60 kg und 150 kg auf den Trägern der Gitterstruktur laufen kann, ohne aufgrund des lokalen Eintauchens der Struktur mit den Füßen im Wasser zu stehen.

4. Schwimmende Solaranlage nach einem der Ansprüche 1 bis 3, wobei die Netzstruktur aus der Verbindung von schwimmenden Stützvorrichtungen (4) besteht, die selbsttragend sind und jeweils oder wenigstens größtenteils ein Photovoltaikmodul oder sogar mehrere Photovoltaikmodule, beispielsweise zwei oder drei Photovoltaikmodule, tragen, wobei die schwimmenden Stützvorrichtungen die Strukturmodule (2) umfassen, wobei jedes Strukturmodul (2) der schwimmenden Stützvorrichtungen (4) das eine Photovoltaikmodul (PV) oder die mehreren Photovoltaikmodule trägt und wobei sich das Strukturmodul (2) jeder schwimmenden Stützvorrichtung (4) in Querrichtung (T) über das Photovoltaikmodul (PV) hinaus erstreckt, so dass zwischen der ersten Reihe (R1) von Photovoltaikmodulen und der zweiten Reihe (R2) von Photovoltaikmodulen ein Wasserweg (Vn) entsteht.

5. Schwimmende Solaranlage nach Anspruch 4, wobei das Strukturmodul (2) jeder schwimmenden Stützvorrichtung (4) aus einem polygonalen Gitterelement besteht, das ein Vieleck bildet, Verbindungsmitteln (5) die Strukturmodule (2) und die schwimmenden Stützvorrichtungen (4) miteinander verbinden, und wobei insbesondere das Strukturmodul (2) Rohre (20) aufweist, die jeweils die Seiten des Vielecks des polygonalen Musters bilden, wobei die Rohre (20) an den Scheitelpunkten des Vielecks durch Verbindungsstücke (21) miteinander verbunden sind.

6. Anlage nach Anspruch 5, wobei die Rohre (20) mehrere luftdicht verschlossene Hüllen bilden oder mit einem Material mit einer geringeren Dichte als Wasser gefüllt sind.

7. Schwimmende Solaranlage nach Anspruch 3 in Kombination mit Anspruch 5, wobei die Verbindungsmittel (5), die die Befestigung der Strukturmodule der Vorrichtungen miteinander gewährleisten, vorstehende Laschen (50) der Verbindungsstücke (21) aufweisen, wobei mehrere Laschen (50) einander gegenüberliegen und von einem Verriegelungselement (51) durchsetzt sind, um die Befestigung zwischen den schwimmenden Stützvorrichtungen (4) zu gewährleisten, und wobei die Netzstruktur auf Höhe des Wasserspiegels liegt, unter der Last der Photovoltaikmodule nicht dauerhaft vollständig untergetaucht ist und dazu ausgebildet ist, vorübergehend und lokal unter der vertikalen Last der Serviceeinheit (U) durch Verformung der flexiblen Laschen (50) untergetaucht zu werden.

8. Anlage nach einem der Ansprüche 4 bis 7, wobei das polygonale Gitterelement, das das Strukturmodul jeder schwimmenden Vorrichtung bildet, ein Dreieck ist, insbesondere ein gleichschenkliges oder gleichseitiges Dreieck, das beispielsweise zur Halterung eines Photovoltaikmoduls geeignet ist, oder eine Raute, die beispielsweise zur Halterung von zwei Photovoltaikmodulen geeignet ist, die insbesondere entgegengesetzte Neigungen aufweisen.

9. Verfahren zur Herstellung der Strukturmodule einer Anlage nach einem der Ansprüche 1 bis 8, wobei die Träger des Gitters Rohre (20) sind, deren Länge den Seiten des polygonalen Gitterelements entspricht und die an den Scheitelpunkten des polygonalen Gitters durch Verbindungsstücke (21) miteinander verbunden sind, und wobei die Schwimmmodule (3) durch die Rohre (20) der Strukturmodule gebildet werden, die mit ihren Verbindungsstücken (21) luftdichte Hüllen bilden, die Luft dicht einschließen, und in dem die Strukturmodule (2) erhalten werden, die polygonale Gitterelemente mit polygonalem Maschenbild der Netzstruktur bilden, durch Montage der Rohre aus Kunststoff, deren Länge den Seiten des polygonalen Gitterelements mit polygonalem Maschenbild entspricht, wobei die Rohre an den Scheitelpunkten der polygonalen Muster durch röhrenförmige Kunststoffverbindungsstücke (21) aneinandergefügt und durch dichtes Verschweißen zwischen den Innen-/Außenseiten der Verbindungsstücke (21) und den Außen-/Innenseiten der Rohre (20) zu Strukturmodulen zusammengefügt werden.

10. Verfahren zur Wartung einer Anlage gemäß einem der Ansprüche 1 bis 9 , wobei die Anlage mit einer schwimmenden Serviceeinheit U ausgestattet ist, die dazu ausgebildet ist, entlang der Wasserstraße (Vn) zwischen der ersten Reihe (R1) von Photovoltaikmodulen und der zweiten Reihe (R2) von Photovoltaikmodulen zu zirkulieren, und wobei die Wartung der Anlage durch die in der oder den Wasserstraßen zwischen den Photovoltaikmodulen (PV) zirkulierende Serviceeinheit (U) gewährleistet wird,
und wobei insbesondere die Anlage eine dritte Reihe (R3) von Photovoltaikmodulen umfasst, die sich an die erste und zweite Reihe von Photovoltaikmodulen anschließt, und wobei sich die zweite Reihe (R2) von Photovoltaikmodulen und die dritte Reihe (R3) von Photovoltaikmodulen jeweils in derselben Längsrichtung (D) erstrecken und in Querrichtung (T), senkrecht zur Längsrichtung, durch die Strukturmodule (2) beabstandet sind, und wobei die Strukturmodule (2), die den Abstand zwischen der zweiten Reihe (R2) von Photovoltaikmodulen und der dritten (R3) von Photovoltaikmodulen bewirken, dazu ausgebildet sind, in einer sich in Längsrichtung (D) erstreckenden Wasserstraße (Vn) zwischen der zweiten Reihe (R2) von Photovoltaikmodulen und der dritten Reihe (R3) von Photovoltaikmodulen einzutauchen und dadurch die Zirkulation einer schwimmenden Serviceeinheit (U) zu erlauben, wobei sich die Strukturmodule (2) im Wesentlichen in der horizontalen Ebene erstrecken, so dass die Druck-/Zugkräfte in der Struktur übertragen werden und in der horizontalen Ebene der Netzstruktur enthalten sind, und
wobei die Anlage, in der die Serviceeinheit (U) installiert ist, umfasst:
- einen ersten Rumpf (C1) und einen zweiten Rumpf (C2), die entsprechend dem Abstand zwischen den beiden Wasserwegen (Vn) voneinander beabstandet sind,
und die jeweils einerseits die erste Reihe (R1) von Photovoltaikmodulen und die zweite Reihe (R2) von Photovoltaikmodulen, und andererseits die zweite Reihe (R2) von Photovoltaikmodulen und die dritte Reihe (R3) von Photovoltaikmodulen trennen, wobei der erste Rumpf (C1) dazu ausgebildet ist, in dem Wasserweg zwischen der ersten Reihe (R1) von Photovoltaikmodulen und der zweiten Reihe (R2) von Photovoltaikmodulen zu zirkulieren, wobei der zweite Rumpf (C2) dazu ausgebildet ist, in dem Wasserweg zwischen der zweiten Reihe (R2) von Photovoltaikmodulen und der dritten Reihe (RR) von Photovoltaikmodulen zu zirkulieren,
- eine Brücke (10), die den ersten Rumpf (C1) und den zweiten Rumpf (C2) miteinander verbindet und dazu ausgebildet ist, die Photovoltaikmodule (PV) der zweiten Reihe (R2) von Photovoltaikmodulen zu überspannen, wenn die Serviceeinheit in Längsrichtung (L) zirkuliert,
und wobei möglicherweise die schwimmende Einheit dazu ausgebildet ist, entlang der Wasserstraße über den verstrebten Strukturmodulen (2; 2') in einem Abstand zwischen der ersten Reihe (R1) von Photovoltaikmodulen und der zweiten Reihe (R2) von Photovoltaikmodulen zu zirkulieren oder entlang der Wasserstraße über den verstrebten Strukturmodulen (2; 2') zwischen der zweiten Reihe (R2) von Photovoltaikmodulen und der dritten Reihe (R3) von Photovoltaikmodulen zu zirkulieren, wobei die Netzstruktur durch Abstützung auf den Strukturmodulen (2, 2 ') örtlich eingedrückt wird.

## Claims

1. Floating solar installation (1) supporting photovoltaic (PV) panels, resulting from the assembly of structural modules (2; 2') and floating modules (3; 3') over a stretch of water, forming a floating network supporting photovoltaic panels, comprising:
- a first row (R1) of photovoltaic panels,
- a second row (R2) of photovoltaic panels,
and wherein the first row (R1) of photovoltaic panels and the second row (R2) of photovoltaic panels extend along one and the same longitudinal direction (D) and are spaced apart along the transverse direction (T), perpendicular to the longitudinal direction, and wherein at least said structural modules (2) ensuring the spacing between the first row (R1) of photovoltaic panels and the second row (R2) of photovoltaic panels are configured to be immersed, allowing a floating service unit (U) to travel along a navigable path (Vn) above said structure modules (2),
said structure of the network, comprising an assembly of said rigid or semi-rigid structure modules (2), being configured to work along the two directions substantially of the horizontal plane of the structure by resisting the compression and tensile forces to which said structure of the network is subjected,
**characterised in that** the structure of the network extends substantially along the horizontal plane, the structure being formed by said assembly of the structure modules (2) forming a lattice of polygonal meshed beams, in particular the lattice has a triangular, hexagonal or diamond mesh, extending along the horizontal plane, the beams of the lattice taking the polygonal pattern of the mesh, offering apertures configured to cool the photovoltaic panels located above the network structure, the lattice of beams forming the structure being configured to be permanently immersed, or alternatively immersed at least locally under the vertical load of the service unit (U) and wherein vertical supports (6, 6')) are fastened to the structure modules (2, 2') in particular to the beams, or even to the floating modules, to ensure the vertical bracing of the photovoltaic panels (PV) with respect to the horizontal plane forming the network structure by ensuring the holding of the photovoltaic panels (PV) out of the water, the structure formed by the lattice of polygonally meshed beams being configured such that the compression/tension forces transit in the structural modules (2), being contained in said horizontal plane of said grid structure.

2. Floating solar installation according to claim 1, wherein the buoyancy of the solar installation (1) is configured so that the structure of the network formed by the lattice of polygonally meshed beams extending along the horizontal plane is permanently fully submerged with the presence of a water height above the structure modules (2) so as to form a navigable path between the first row (R1) of photovoltaic panels and the second row (R2) of photovoltaic panels, extending along the longitudinal direction (D), the photovoltaic panels (PV) of the installation being held out of the water by the vertical supports (6), and wherein the structural modules (2) forming the lattice of polygonally meshed beams extending along the horizontal plane are secured below the floating modules (3), in order to keep the structure of the network permanently fully immersed.

3. Floating solar installation according to claim 1, wherein the buoyancy of the installation is configured such that:
- the network structure formed by the lattice of polygonally meshed beams extending along the horizontal plane is at water level when the network structure is not subjected to a substantial vertical load other than that of the photovoltaic panels,
- said structural modules (2) are immersed, at least locally, under the vertical load of a service unit (U) coming into vertical abutment on the network structure, the photovoltaic panels (PV) of the installation being held out of the water the vertical supports (6) during local pressing down by the service unit (U) and in which in particular the buoyancy of the installation is insufficient for an operator, man or woman, weighing between 60 kg and 150 kg to be able to walk on the beams of the lattice structure without having their feet in the water due to the local pressing down of the structure.

4. Floating solar installation according to one of claims 1 to 3, wherein the structure of the network results from the assembly of floating, self-supporting support devices (4), each or at least most supporting a photovoltaic panel, or even several panels such as two or three photovoltaic panels, said floating support devices comprising said structure modules (2), each structure module (2) of the floating support devices (4) supporting the photovoltaic panel (PV), or even said plurality of photovoltaic panels, and wherein the structure module (2) of each floating support device (4) extends protruding with respect to the photovoltaic panel (PV), along the transverse direction (T), so as to create the navigable path (Vn) between the first row (R1) of photovoltaic panels and the second row (R2) of the photovoltaic panels.

5. Floating solar installation according to claim 4, wherein the structure module (2) of each floating support device (4) consists of a pattern of the polygonal-mesh lattice, forming a polygon, connecting means (5) securing the structure modules (2) and the floating support devices (4) together and wherein in particular the structure module (2) includes tubes (20), forming respectively the sides of the polygon of the polygonal pattern, the tubes (20) being assembled together by couplings (21) at the vertices of the polygon.

6. Installation according to claim 5, wherein the tubes (20) form several envelopes sealingly enclosing air, or are filled with a material of lower density than water.

7. Floating solar installation according to claim 3 taken in combination with claim 5, wherein the connecting means (5) securing the structure modules of the devices including protruding lugs (50) of the couplings (21) to each other, several lugs (50) being put facing and having a locking member (51) passing through them to provide the attachment between said floating support devices (4) and wherein the structure of the network being at water level, not fully immersed permanently, under the load of the photovoltaic panels, configured to be temporarily immersed, and locally under the vertical load of the service unit (U), by deformation of the lugs (50), flexible.

8. Installation according to one of claims 4 to 7, wherein the pattern of the polygonal-mesh lattice forming the structural module of each floating device is a triangle, in particular an isosceles or equilateral triangle, for example suitable for supporting a photovoltaic panel, or a diamond, for example suitable for supporting two photovoltaic panels, having in particular opposite inclinations.

9. Method for manufacturing the structure modules of an installation according to one of claims 1 to 8, and installation wherein the beams of the lattice are tubes (20) with a length corresponding to the sides of the polygonal pattern of the lattice and assembled together by couplings (21) at the vertices of the polygonal pattern and wherein the floating modules (3) are formed by the tubes (20) of the structure modules which form sealed envelopes containing air in a sealed manner, with their coupling (21), and a method in which the structural modules (2) forming polygonal patterns of the polygonal-mesh lattice of the network structure are obtained by assembling the tubes (20), plastics with a length corresponding to the sides of the polygonal pattern of the polygonal-mesh lattice, the tubes being put end to end by plastic tubular couplings (21) at the vertices of the polygonal patterns and assembled by sealed welding between internal/external surfaces of the couplings (21) and the outer/inner surfaces of the tubes (20) to form the structural modules.

10. Method for maintaining an installation according to one of claims 1 to 9, wherein said installation is equipped with a floating service unit U, configured to travel along the navigable path (Vn) between the first row (R1) of photovoltaic panels and the second row (R2) of photovoltaic panels and wherein the installation is maintained thanks to the service unit (U) circulating in the navigable path(s) between the photovoltaic panels (PV), and wherein in particular said installation comprising a third row (R3) of photovoltaic panels, consecutive on the first and second rows of photovoltaic panels, and wherein the second row (R2) of photovoltaic panels and the third row (R3) of photovoltaic panels each extend along one and the same longitudinal direction (D) and are spaced apart along the transverse direction (T) perpendicular to the longitudinal direction by the modules of the structure (2) and wherein said structure modules (2) providing the spacing between the second row (R2) of photovoltaic panels and the third (R3) row of photovoltaic panels are configured to be immersed forming a navigable path (Vn) along the longitudinal direction (D) between the second row (R2) of photovoltaic panels and the third row (R3) of photovoltaic panels allowing the circulation of a floating service unit (U), the structure modules (2) extending substantially along the horizontal plane such that the compression/tension forces transit through the structure, being contained in said horizontal plane of said network structure
and installation wherein the service unit (U) comprises:
- a first shell (C1) and a second shell (C2) spaced apart according to the spacing between the two navigable parts (Vn) separating respectively the first row (R1) of photovoltaic panels and the second row (R2) of photovoltaic panels on the one hand, and the second row (R2) of photovoltaic panels and the third row (R3) of photovoltaic panels on the other hand, the first shell (C1) being configured to travel in the navigable path between the first row (R1) of photovoltaic panels and the second row (R2) of photovoltaic panels, the second shell (C2) configured to travel in the navigable path between the second row (R2) of photovoltaic panels and the third row (R3) of photovoltaic panels
- a catwalk (10), joining the first shell (C1) and the second shell (C2) together, and configured to straddle the photovoltaic panels (PV) of the second row (R2) of photovoltaic panels when the service unit travels in the longitudinal direction (L),
and wherein, possibly, the floating unit is configured to travel along the navigable path above the structure modules (2; 2') bracing between the first row (R1) of photovoltaic panels and the second row (R2) of photovoltaic panels, or even along the navigable path above the structure modules (2; 2') bracing between the second row (R2) of photovoltaic panels and the third row (R3) of photovoltaic panels, causing the local pressing down of the network structure, by pressing on said structure modules (2, 2 ').
